# EUROPEAN PATENT APPLICATION

(11) **EP 4 654 740 A1**
(43) Date of publication of application: **26.11.2025**
(21) Application number: 24752761.7
(22) Date of filing: 31.01.2024
(51) Int. Cl.: H04W 76/34, H04L 65/1063

(54) **EDGE APPLICATION SERVER SELECTION METHOD AND APPARATUS**

(30) Priority: 10.02.2023 CN 202310131313
(71) Applicant: Huawei Technologies Co., Ltd., Shenzhen, Guangdong 518129 (CN)
(72) Inventor: GU, Zhuojia, Shenzhen, Guangdong 518129 (CN); WEI, Xinpeng, Shenzhen, Guangdong 518129 (CN); WANG, Yan, Shenzhen, Guangdong 518129 (CN)
(74) Representative: Pfenning, Meinig & Partner mbB
(86) International application number: PCT/CN2024/074916
(87) International publication number: WO 2024/164905

(57) **Abstract**

This application provides a method for selecting an edge application server and an apparatus, to reduce latency of accessing an updated EAS by a terminal device, and relates to the field of wireless communication technologies. In the method, an application function network element may subscribe to, from a core network device by using first request information, an event that an EAS of one or more terminal devices changes. The core network device may monitor the EAS of the one or more terminal devices. The core network device may indicate, to the application function network element by using first notification information, to migrate an application of the one or more terminal devices to a first EAS. Based on this solution, the application function network element may subscribe to, from the core network device, the event that the EAS of the terminal device changes. When the EAS of the terminal device changes, the core network device may send the first notification information to the application function network element. In this way, the application function network element may trigger the terminal device to disconnect from an application layer and access the first EAS.

## Description

### CROSS-REFERENCE TO RELATED APPLICATIONS

This application claims priority to Chinese Patent Application No. 202310131313.X, filed with the China National Intellectual Property Administration on February 10, 2023 and entitled "METHOD FOR SELECTING EDGE APPLICATION SERVER AND APPARATUS", which is incorporated herein by reference in its entirety.

### TECHNICAL FIELD

This application relates to the field of wireless communication technologies, and in particular, to a method for selecting an edge application server and an apparatus.

### BACKGROUND

A 5^{th} generation (5^{th} generation, 5G) communication system in a 3^{rd} generation partnership project (3^{rd} generation partnership project, 3GPP) enhances support for an edge computing scenario standard, and provides, mainly in terms of edge application server (edge application server, EAS) discovery/rediscovery, edge application migration, and local capability exposure, a capability of a 5G network to support edge computing.

In an edge computing scenario, sometimes a common EAS needs to be selected for a group of terminal devices. For example, in a multi-user low-latency game scenario, registration information and game information of a plurality of terminal devices are stored in a same EAS. Therefore, the plurality of terminal devices need to access the same EAS. Because the terminal device has mobility, the terminal device in the terminal device group may dynamically join in or leave the terminal device group. Therefore, the common EAS selected for the group of terminal devices may need to be dynamically adjusted, to enable the common EAS accessed by the terminal device group to be optimal.

Currently, if edge application migration occurs, when a 5G core (5G core, 5GC) selects a new common EAS for a group of terminal devices, an SMF may be triggered to perform user plane insertion/modification/removal, and a domain name server (domain name server, DNS) cache in the terminal device is cleared. However, an application layer connection between the group of terminal devices and an old common EAS is not broken. Consequently, the group of terminal devices cannot simultaneously access the new common EAS. When the application layer connection is broken, the terminal device can re-initiate a DNS request to connect to the new common EAS.

### SUMMARY

This application provides a method for selecting an edge application server and an apparatus, to reduce latency of accessing an updated EAS by a terminal device.

According to a first aspect, a method for selecting an edge application server is provided. The method may be performed by a core network device, or may be performed by a chip/a chip system. In the method, the core network device receives first request information from an application function network element. The first request information includes a first identifier, and the first identifier indicates an event that an EAS of one or more terminal devices changes. The first request information is used to subscribe to the event that the EAS of the one or more terminal devices changes. The core network device sends first notification information to the application function network element, where the first notification information includes the first identifier. The first notification information indicates to migrate an application of the one or more terminal devices to a first EAS, and the first EAS is an EAS selected for the one or more terminal devices.

Based on this solution, the application function network element may subscribe to, from the core network device, the event that the EAS of the terminal device changes. When the EAS of the terminal device changes, the core network device may send the first notification information to the application function network element. In this way, the application function network element may trigger the terminal device to disconnect from an application layer and access the first EAS.

In a possible implementation, the core network device receives second notification information from the application function network element, where the second notification information indicates that the first EAS supports application migration. The core network device configures a user plane path for the first EAS. The core network device sends third notification information to the application function network element, where the third notification information includes the first identifier, and the third notification information indicates that the user plane path of the first EAS is already configured.

Based on this solution, the application function network element may determine, based on the first notification information, whether the first EAS supports the application migration, and send the second notification information to the core network device when the first EAS supports the application migration, so that the core network device configures the user plane path for the first EAS.

In a possible implementation, the core network device sends location information of the one or more terminal devices to an edge application server discovery function network element. The core network device receives first information from the edge application server discovery function network element, where the first information includes a full qualified domain name and internet protocol IP information of the first edge application server EAS, the full qualified domain name is associated with the one or more terminal devices, and the first EAS is the EAS selected for the one or more terminal devices. Based on this solution, the edge application server discovery function network element may select the first EAS for the one or more terminal devices.

In a possible implementation, the first notification information further includes the IP information of the first EAS. Based on this solution, when the first notification information includes the IP information of the first EAS, the application function network element may indicate the terminal device to send uplink data to the first EAS, to trigger the terminal device to disconnect from an application layer.

In a possible implementation, the first notification information further includes a second identifier, and the second identifier indicates the one or more terminal devices. Based on this solution, the core network device may indicate, to the application function network element by using the second identifier, a terminal device whose EAS changes.

In a possible implementation, the second notification information further includes a second identifier and/or IP information of the first EAS, and the second identifier indicates the one or more terminal devices. Based on this solution, the core network device may indicate, to the application function network element, the terminal device and/or the EAS for which the user plane path is already configured.

In a possible implementation, the first information further includes a second identifier, and the second identifier indicates the one or more terminal devices. Based on this solution, the edge application server discovery function network element may indicate, to the core network device by using the second identifier, a terminal device whose EAS is updated.

In a possible implementation, the second identifier includes a group identifier of a terminal device group including the one or more terminal devices, or the second identifier includes a terminal device identifier of the one or more terminal devices. Based on this solution, the terminal device or the terminal device group may be determined by using the second identifier. When the second identifier includes the terminal device group identifier, latency of accessing the common first EAS by all terminal devices included in the terminal device group can be reduced, thereby ensuring that all the terminal devices can access the common first EAS as soon as possible.

In a possible implementation, a session management function network element included in the core network device receives the first information from the edge application server discovery function network element. The session management function network element sends second request information to a unified data management function network element included in the core network device, where the second request information includes the full qualified domain name and a third identifier corresponding to the full qualified domain name, the third identifier indicates the one or more terminal devices, and the second request information is used to request IP information of a second EAS corresponding to the full qualified domain name. The unified data management function network element sends the IP information of the second EAS to the session management function network element. The session management function network element sends the first notification information to the application function network element, where the IP information of the first EAS is different from the IP information of the second EAS. Based on this solution, the core network device may determine, via the session management function network element, whether the EAS of the one or more terminal devices changes.

In a possible implementation, the session management function network element sends the IP information of the first EAS and the third identifier to the unified data management function network element. The unified data management function network element correspondingly stores the IP information of the first EAS and the third identifier. Based on this solution, the unified data management function network element may store IP information of an updated first EAS of the one or more terminal devices.

In a possible implementation, a network exposure function network element included in the core network device receives the first request information from the application function network element. The network exposure function network element sends the first request information to a session management function network element included in the core network device. The session management function network element sends response information of the first request information to the network exposure function network element. The network exposure function network element sends the response information of the first request information to the application function network element. Based on this solution, the core network device may exchange information with the application function network element via the network exposure function network element.

In a possible implementation, a network exposure function network element included in the core network device receives the first request information from the application function network element. The network exposure function network element sends the first request information to a unified data management function network element included in the core network device. The unified data management function network element sends response information of the first request information to the network exposure function network element. The network exposure function network element sends the response information of the first request information to the application function network element. Based on this solution, the core network device may monitor, via the unified data management function network element, the event that the EAS of the one or more terminal devices changes.

In a possible implementation, a session management function network element included in the core network device sends the first notification information to a network exposure function network element included in the core network device. The network exposure function network element sends the first notification information to the application function network element.

In a possible implementation, a unified data management function included in the core network device sends the first notification information to a network exposure function network element included in the core network device. The network exposure function network element sends the first notification information to the application function network element.

In a possible implementation, a network exposure function network element included in the core network device receives the second notification information from the application function network element. The network exposure function network element sends the second notification information to a session management function network element included in the core network device. The session management function network element sends the third notification information to the network exposure function network element. The network exposure function network element sends the third notification information to the application function network element.

According to a second aspect, a method for selecting an edge application server is provided. The method may be performed by a core network device, or may be performed by a chip/a chip system. In the method, the core network device sends location information of a terminal device to an edge application server discovery function network element. The core network device receives internet protocol IP information of an edge application server EAS from the edge application server discovery function network element. The EAS is an EAS selected for the terminal device. The core network device sends second information to the terminal device, where the second information includes the IP information of the EAS and first indication information, and the first indication information indicates the terminal device to establish an application layer connection to the EAS.

Based on this solution, the terminal device may establish the application layer connection to the EAS based on the first indication information and the IP information of the EAS, so that the terminal device can access a new EAS to perform a service.

In a possible implementation, the core network device sends a second identifier to the edge application server discovery function network element, where the second identifier indicates the terminal device. Based on this solution, the core network device may indicate, to the edge application server discovery function network element by using the second identifier, the terminal device whose EAS is updated.

In a possible implementation, the second identifier includes a group identifier of a terminal device group to which the terminal device belongs, or the second identifier includes a terminal device identifier of the terminal device. Based on this solution, the terminal device or the terminal device group may be determined by using the second identifier. When the second identifier includes the terminal device group identifier, latency of accessing a common first EAS by all terminal devices included in the terminal device group can be reduced, thereby ensuring that all the terminal devices can access the common first EAS as soon as possible.

In a possible implementation, the core network device sends a session update request to the terminal device, where the session update request includes the second information. Based on this solution, the core network device may indicate, by using the session update request, the terminal device to access a new EAS.

In a possible implementation, a session management function network element included in the core network device sends the location information to the edge application server discovery function network element. The session management function network element receives the IP information of the EAS from the edge application server discovery function network element. Based on this solution, the core network device may exchange information with the edge application server discovery function network element via the session management function network element.

According to a third aspect, a method for selecting an edge application server is provided. The method may be performed by an application function network element, or may be performed by a chip/a chip system. In the method, the application function network element sends first request information to a core network device, where the first request information includes a first identifier, and the first request information is used to subscribe to an event that an edge application server EAS of one or more terminal devices changes. The application function network element receives first notification information from the core network device, where the first notification information includes the first identifier. The first notification information indicates to migrate an application of the one or more terminal devices to a first EAS, and the first EAS is an EAS selected for the one or more terminal devices.

In a possible implementation, the application function network element sends second notification information to the core network device, where the second notification information indicates that the first EAS supports application migration. The application function network element receives third notification information from the core network device, where the third notification information includes the first identifier, and the third notification information indicates that a user plane path of the first EAS is already configured.

In a possible implementation, the first notification information further includes IP information of the first EAS.

In a possible implementation, the first request information further includes a second identifier, and the second identifier indicates the one or more terminal devices.

In a possible implementation, the second notification information further includes a second identifier and/or IP information of the first EAS, and the second identifier indicates the one or more terminal devices.

In a possible implementation, the second identifier includes a group identifier of a terminal device group including the one or more terminal devices, or the second identifier includes a terminal device identifier of the one or more terminal devices.

In a possible implementation, the application function network element sends the first request information to a network exposure function network element included in the core network device.

In a possible implementation, the application function network element receives the first notification information from a network exposure function network element included in the core network device.

According to a fourth aspect, a method for selecting an edge application server is provided. The method may be performed by an edge application server discovery function network element, or may be performed by a chip/a chip system. In the method, the edge application server discovery function network element receives location information of a terminal device and second indication information from a core network device, where the second indication information indicates to update an EAS of the terminal device. The edge application server discovery function network element sends first information to the core network device, where the first information includes a full qualified domain name and internet protocol IP information of a first edge application server EAS, the full qualified domain name is associated with the terminal device, and the first EAS is an EAS selected for the terminal device.

In a possible implementation, the edge application server discovery function network element receives the location information of the terminal device and the second indication information from a session management function network element included in the core network device. The edge application server discovery function network element sends the first information to the session management function network element included in the core network device.

According to a fifth aspect, a method for selecting an edge application server is provided. In the method, an application function network element sends first request information to a core network device, where the first request information includes a first identifier, and the first identifier indicates an event that an edge application server EAS of one or more terminal devices changes. The first request information is used to subscribe to the event that the EAS of the one or more terminal devices changes. The core network device sends first notification information to the application function network element, where the first notification information includes the first identifier. The first notification information indicates to migrate an application of the one or more terminal devices to a first EAS, and the first EAS is an EAS selected for the one or more terminal devices.

In a possible implementation, the application function network element sends second notification information to the core network device, where the second notification information indicates that the first EAS supports application migration. The core network device configures a user plane path for the first EAS. The core network device sends third notification information to the application function network element, where the third notification information includes the first identifier, and the third notification information indicates that the user plane path of the first EAS is already configured.

In a possible implementation, the core network device sends location information of the one or more terminal devices to an edge application server discovery function network element. The edge application server discovery function network element sends first information to the core network device, where the first information includes a full qualified domain name and internet protocol IP information of the first EAS, and the full qualified domain name is associated with the one or more terminal devices.

In a possible implementation, the first notification information further includes the IP information of the first EAS.

In a possible implementation, the first notification information further includes a second identifier, and the second identifier indicates the one or more terminal devices.

In a possible implementation, the second notification information further includes a second identifier and/or IP information of the first EAS, and the second identifier indicates the one or more terminal devices.

In a possible implementation, the first information further includes a second identifier, and the second identifier indicates the one or more terminal devices.

In a possible implementation, the second identifier includes a group identifier of a terminal device group including the one or more terminal devices, or the second identifier includes a terminal device identifier of the one or more terminal devices.

In a possible implementation, the edge application server discovery function network element sends the first information to a session management function network element included in the core network device. The session management function network element sends second request information to a unified data management function network element included in the core network device, where the second request information includes the full qualified domain name and a third identifier corresponding to the full qualified domain name, the third identifier indicates the one or more terminal devices, and the second request information is used to request IP information of a second EAS corresponding to the full qualified domain name. The unified data management function network element sends the IP information of the second EAS to the session management function network element. The session management function network element sends the first notification information to the application function network element, where the IP information of the first EAS is different from the IP information of the second EAS.

In a possible implementation, the session management function network element sends the IP information of the first EAS and the third identifier to the unified data management function network element. The unified data management function network element correspondingly stores the IP information of the first EAS and the third identifier.

In a possible implementation, a network exposure function network element included in the core network device receives the first request information from the application function network element. The network exposure function network element sends the first request information to a session management function network element included in the core network device. The session management function network element sends response information of the first request information to the network exposure function network element. The network exposure function network element sends the response information of the first request information to the application function network element.

In a possible implementation, a network exposure function network element included in the core network device receives the first request information from the application function network element. The network exposure function network element sends the first request information to a unified data management function network element included in the core network device. The unified data management function network element sends response information of the first request information to the network exposure function network element. The network exposure function network element sends the response information of the first request information to the application function network element.

In a possible implementation, a session management function network element included in the core network device sends the first notification information to a network exposure function network element included in the core network device. The network exposure function network element sends the first notification information to the application function network element.

In a possible implementation, a unified data management function included in the core network device sends the first notification information to a network exposure function network element included in the core network device. The network exposure function network element sends the first notification information to the application function network element.

In a possible implementation, the application function network element sends the second notification information to a network exposure function network element included in the core network device. The network exposure function network element sends the second notification information to a session management function network element included in the core network device. The session management function network element sends the third notification information to the network exposure function network element. The network exposure function network element sends the third notification information to the application function network element.

According to a sixth aspect, a method for selecting an edge application server is provided. In the method, a core network device sends location information of a terminal device to an edge application server discovery function network element. The edge application server discovery function network element sends internet protocol IP information of an edge application server EAS to the core network device. The EAS is an EAS selected for the terminal device. The core network device sends second information to the terminal device, where the second information includes the IP information of the EAS and first indication information, and the first indication information indicates the terminal device to establish an application layer connection to the EAS.

In a possible implementation, the core network device sends a second identifier to the edge application server discovery function network element, where the second identifier indicates the terminal device.

In a possible implementation, the second identifier includes a group identifier of a terminal device group to which the terminal device belongs, or the second identifier includes a terminal device identifier of the terminal device.

In a possible implementation, the core network device sends a session update request to the terminal device, where the session update request includes the second information.

In a possible implementation, a session management function network element included in the core network device sends the second identifier and the location information to the edge application server discovery function network element, where the second identifier indicates the terminal device. The edge application server discovery function network element determines the EAS based on the location information. The edge application server discovery function network element sends the IP information of the EAS and the second identifier to the session management function network element.

In a possible implementation, a session management function network element included in the core network device sends the IP information of the EAS and the second identifier to a unified data management function network element included in the core network device. The unified data management function network element correspondingly stores the IP information of the EAS and the second identifier.

In a possible implementation, a unified data management function network element included in the core network device sends the second identifier, a full qualified domain name corresponding to the second identifier, and the IP information of the EAS to a unified data repository included in the core network device. The unified data repository sends first notification information to a PCF included in the core network device, where the first notification information includes the second identifier, the full qualified domain name, and the IP information of the EAS, and the first notification information indicates that the EAS of the terminal device changes. The PCF sends second notification information to a session management function network element included in the core network device, where the second notification information includes the second identifier, the full qualified domain name, and the IP information of the EAS, and the second notification information indicates that session policy control of the terminal device is to be updated. The session management function network element configures a user plane path for the EAS.

According to a seventh aspect, a communication apparatus is provided, and includes a processing unit and a transceiver unit.

The transceiver unit is configured to receive first request information from an application function network element, where the first request information includes a first identifier, and the first identifier indicates an event that an edge application server EAS of one or more terminal devices changes. The first request information is used to subscribe to the event that the EAS of the one or more terminal devices changes. The processing unit is configured to monitor the event that the EAS of the one or more terminal devices changes. The transceiver unit is further configured to send first notification information to the application function network element, where the first notification information includes the first identifier. The first notification information indicates to migrate an application of the one or more terminal devices to a first EAS, and the first EAS is an EAS selected for the one or more terminal devices.

In a possible implementation, the transceiver unit is further configured to receive second notification information from the application function network element, where the second notification information indicates that the first EAS supports application migration. The core network device configures a user plane path for the first EAS. The transceiver unit is further configured to send third notification information, where the third notification information includes the first identifier, and the third notification information indicates that the user plane path of the first EAS is already configured.

In a possible implementation, the transceiver unit is further configured to send location information of the one or more terminal devices to an edge application server discovery function network element. The transceiver unit is further configured to receive first information from the edge application server discovery function network element, where the first information includes a full qualified domain name and internet protocol IP information of the first edge application server EAS, the full qualified domain name is associated with the one or more terminal devices, and the first EAS is the EAS selected for the one or more terminal devices.

In a possible implementation, the first notification information further includes the IP information of the first EAS.

In a possible implementation, the first notification information further includes a second identifier, and the second identifier indicates the one or more terminal devices.

In a possible implementation, the second notification information further includes a second identifier and/or IP information of the first EAS, and the second identifier indicates the one or more terminal devices.

In a possible implementation, the first information further includes a second identifier, and the second identifier indicates the one or more terminal devices.

In a possible implementation, the second identifier includes a group identifier of a terminal device group including the one or more terminal devices, or the second identifier includes a terminal device identifier of the one or more terminal devices.

In a possible implementation, a session management function network element included in the communication apparatus is specifically configured to receive the first information from the edge application server discovery function network element. The session management function network element is specifically configured to send second request information to a unified data management function network element included in the communication apparatus, where the second request information includes the full qualified domain name and a third identifier corresponding to the full qualified domain name, the third identifier indicates the one or more terminal devices, and the second request information is used to request IP information of a second EAS corresponding to the full qualified domain name. The unified data management function network element is specifically configured to send the IP information of the second EAS to the session management function network element. The session management function network element is specifically configured to send the first notification information to the application function network element, where the IP information of the first EAS is different from the IP information of the second EAS.

In a possible implementation, the session management function network element is further configured to send the IP information of the first EAS and the third identifier to the unified data management function network element. The unified data management function network element is further configured to correspondingly store the IP information of the first EAS and the third identifier.

In a possible implementation, a network exposure function network element included in the communication apparatus is specifically configured to receive the first request information from the application function network element. The network exposure function network element is specifically configured to send the first request information to a session management function network element included in the communication apparatus. The session management function network element is specifically configured to send response information of the first request information to the network exposure function network element. The network exposure function network element is specifically configured to send the response information of the first request information to the application function network element.

In a possible implementation, a network exposure function network element included in the communication apparatus is specifically configured to receive the first request information from the application function network element. The network exposure function network element is specifically configured to send the first request information to a unified data management function network element included in the communication apparatus. The unified data management function network element is specifically configured to send response information of the first request information to the network exposure function network element. The network exposure function network element is specifically configured to send the response information of the first request information to the application function network element.

In a possible implementation, a session management function network element included in the communication apparatus is specifically configured to send the first notification information to a network exposure function network element included in the communication apparatus. The network exposure function network element is specifically configured to send the first notification information to the application function network element.

In a possible implementation, a unified data management function included in the communication apparatus is specifically configured to send the first notification information to a network exposure function network element included in the communication apparatus. The network exposure function network element is specifically configured to send the first notification information to the application function network element.

In a possible implementation, a network exposure function network element included in the communication apparatus is specifically configured to receive the second notification information from the application function network element. The network exposure function network element is specifically configured to send the second notification information to a session management function network element included in the communication apparatus. The session management function network element is specifically configured to send the third notification information to the network exposure function network element. The network exposure function network element is specifically configured to send the third notification information to the application function network element.

According to an eighth aspect, a communication apparatus is provided, and includes a processing unit and a transceiver unit.

The transceiver unit is configured to send location information of a terminal device to an edge application server discovery function network element. The transceiver unit is further configured to receive internet protocol IP information of an edge application server EAS from the edge application server discovery function network element. The EAS is an EAS selected for the terminal device. The processing unit is configured to generate second information. The transceiver unit is further configured to send the second information to the terminal device, where the second information includes the IP information of the EAS and first indication information, and the first indication information indicates the terminal device to establish an application layer connection to the EAS.

In a possible implementation, the transceiver unit is further configured to send a second identifier to the edge application server discovery function network element, where the second identifier indicates the terminal device.

In a possible implementation, the second identifier includes a group identifier of a terminal device group to which the terminal device belongs, or the second identifier includes a terminal device identifier of the terminal device.

In a possible implementation, the transceiver unit is specifically configured to send a session update request to the terminal device, where the session update request includes the second information.

In a possible implementation, a session management function network element included in the communication apparatus is specifically configured to send the location information to the edge application server discovery function network element. The session management function network element is specifically configured to receive the IP information of the EAS from the edge application server discovery function network element.

According to a ninth aspect, a communication apparatus is provided, and includes a processing unit and a transceiver unit.

The processing unit is configured to generate first request information. The transceiver unit is configured to send the first request information to a core network device, where the first request information includes a first identifier, and the first request information is used to subscribe to an event that an edge application server EAS of one or more terminal devices changes. The transceiver unit is further configured to receive first notification information from the core network device, where the first notification information includes the first identifier. The first notification information indicates to migrate an application of the one or more terminal devices to a first EAS, and the first EAS is an EAS selected for the one or more terminal devices.

In a possible implementation, the transceiver unit is further configured to send second notification information to the core network device, where the second notification information indicates that the first EAS supports application migration. The transceiver unit is further configured to receive third notification information from the core network device, where the third notification information includes the first identifier, and the third notification information indicates that a user plane path of the first EAS is already configured.

In a possible implementation, the first notification information further includes IP information of the first EAS.

In a possible implementation, the first request information further includes a second identifier, and the second identifier indicates the one or more terminal devices.

In a possible implementation, the second notification information further includes a second identifier and/or IP information of the first EAS, and the second identifier indicates the one or more terminal devices.

In a possible implementation, the second identifier includes a group identifier of a terminal device group including the one or more terminal devices, or the second identifier includes a terminal device identifier of the one or more terminal devices.

In a possible implementation, the transceiver unit is specifically configured to send the first request information to a network exposure function network element included in the core network device.

In a possible implementation, the transceiver unit is specifically configured to receive the first notification information from a network exposure function network element included in the core network device.

According to a tenth aspect, a communication apparatus is provided, and includes a processing unit and a transceiver unit.

The transceiver unit is configured to receive location information of a terminal device and second indication information from a core network device, where the second indication information indicates to update an EAS of the terminal device. The processing unit is configured to select a first EAS for the terminal device. The transceiver unit is further configured to send first information to the core network device, where the first information includes a full qualified domain name and internet protocol IP information of the first edge application server EAS, and the full qualified domain name is associated with the terminal device.

In a possible implementation, the transceiver unit is specifically configured to receive the location information of the terminal device and the second indication information from a session management function network element included in the core network device. The transceiver unit is specifically configured to send the first information to the session management function network element included in the core network device.

According to an eleventh aspect, a communication apparatus is provided. The communication apparatus may be the communication apparatus in any one of the possible implementations of the seventh aspect to the tenth aspect in the foregoing embodiments, or a chip disposed in the communication apparatus in any one of the first aspect to the fourth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the core network device in any one of the possible implementations of the first aspect or the second aspect, or the communication apparatus is enabled to perform the method performed by the application function network element in any one of the possible implementations of the third aspect, or the communication apparatus is enabled to perform the method performed by the edge application server discovery function network element in any one of the possible implementations of the fourth aspect.

It should be understood that the communication interface may be implemented by using an antenna, a feeder, a coder/decoder, and the like in the communication apparatus. Alternatively, if the communication apparatus is a chip disposed in a network device or a terminal device, the communication interface may be an input/output interface of the chip, for example, an input/output pin. The communication apparatus may further include a transceiver, used by the communication apparatus to communicate with another device.

According to a twelfth aspect, an embodiment of this application provides a chip system. The chip system includes a processor, and may further include a memory, configured to implement the method performed by the core network device, the application function network element, or the edge application server discovery function network element in any one of the possible implementations of the first aspect to the fourth aspect. In a possible implementation, the chip system further includes a memory, configured to store program instructions and/or data. The chip system may include a chip, or may include a chip and another discrete component.

According to a thirteenth aspect, this application provides a computer-readable storage medium. The computer-readable storage medium stores a computer program or instructions. When the computer program or the instructions are run, the method performed by the core network device, the application function network element, or the edge application server discovery function network element in the foregoing aspects is implemented.

According to a fourteenth aspect, a computer program product is provided. The computer program product includes computer program code or instructions. When the computer program code or the instructions are run, the method performed by the core network device, the application function network element, or the edge application server discovery function network element in the foregoing aspects is performed.

According to a fifteenth aspect, a communication apparatus is provided. The communication apparatus includes units or modules configured to perform the methods in the foregoing aspects.

According to a sixteenth aspect, a chip system is provided, and includes a logic circuit and an input/output interface. The logic circuit is configured to perform the method performed by the core network device, the application function network element, or the edge application server discovery function network element. The input/output interface is configured to communicate with another apparatus.

For beneficial effects of the third aspect to the sixteenth aspect and the implementations thereof, refer to descriptions of the beneficial effects of the method in the first aspect and the second aspect and the implementations thereof.

### BRIEF DESCRIPTION OF DRAWINGS

FIG. 1A is a diagram of a network architecture according to an embodiment of this application;
FIG. 1B is a diagram of another network architecture according to an embodiment of this application;
FIG. 1C is a diagram of another network architecture according to an embodiment of this application;
FIG. 2 is a diagram of a scenario in which a common EAS is selected for a terminal device group;
FIG. 3 is an example flowchart of a method for selecting an edge application server according to an embodiment of this application;
FIG. 4A is an example flowchart of another method for selecting an edge application server according to an embodiment of this application;
FIG. 4B is an example flowchart of another method for selecting an edge application server according to an embodiment of this application;
FIG. 5 is an example flowchart of another method for selecting an edge application server according to an embodiment of this application;
FIG. 6 is an example flowchart of another method for selecting an edge application server according to an embodiment of this application;
FIG. 7 is an example flowchart of another method for selecting an edge application server according to an embodiment of this application;
FIG. 8 is an example flowchart of another method for selecting an edge application server according to an embodiment of this application;
FIG. 9 is an example flowchart of another method for selecting an edge application server according to an embodiment of this application;
FIG. 10 is a diagram of a communication apparatus according to an embodiment of this application;
FIG. 11 is a diagram of another communication apparatus according to an embodiment of this application;
FIG. 12 is a diagram of another communication apparatus according to an embodiment of this application; and
FIG. 13 is a diagram of another communication apparatus according to an embodiment of this application.

### DESCRIPTION OF EMBODIMENTS

The technical solutions provided in embodiments of this application are described below with reference to the accompanying drawings.

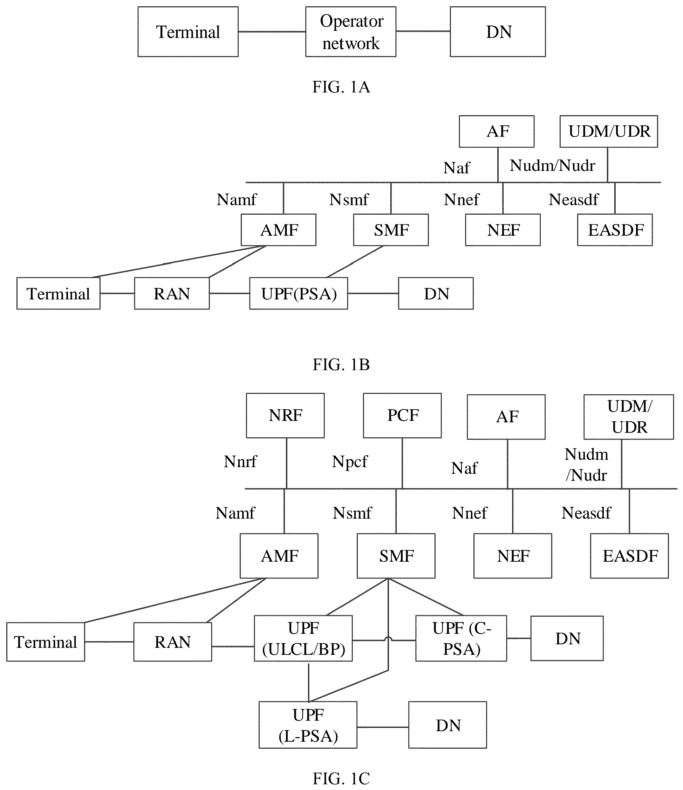

FIG. 1A is a diagram of a 5^{th} generation (5^{th} generation, 5G) network architecture. The 5G network architecture shown in FIG. 1A may include three parts: an operator network, a terminal, and a data network (data network, DN). The following briefly describes the 5G network architecture.

In this embodiment of this application, the terminal may access the DN by using a protocol data unit session anchor (protocol data unit session anchor, PSA) or by using an uplink classifier (uplink classifier, ULCL) in an offloading manner, or in another manner, for example, access the DN in a roaming manner. This is not specifically limited in this application. FIG. 1B is a diagram of a network architecture in which the terminal accesses the DN by using the PSA in a 5G mobile edge computing (multi-access edge computing, MEC) architecture. FIG. 1C is a diagram of a network architecture in which the terminal accesses the DN by using the ULCL in a 5G MEC architecture.

In FIG. 1B, the operator network may include one or more of the following: an access and mobility management function (access and mobility management function, AMF) network element, an application function (application function, AF) network element, a session management function (session management function, SMF) network element, a network exposure function (network exposure function, NEF) network element, a unified data repository (unified data repository, UDR), an EAS discovery function (edge application server discovery function, EASDF) network element, a unified data management (unified data management, UDM) network element, a user plane function (user plane function, UPF) network element, a radio access network (radio access network, RAN) device, or the like. In the foregoing operator network, a network element other than the radio access network device may be referred to as a core network element.

The session management function network element manages user protocol data unit (protocol data unit, PDU) session creation, deletion, and the like, and maintains a PDU session context and user plane forwarding information.

The application function network element is a function network element that provides various business services, and can interact with the core network via an NEF and interact with a policy management framework to perform policy management.

The network exposure function network element provides a framework, authentication, and an interface that are related to network capability exposure, and transfers information between a 5G system network function and another network function.

The unified data management function network element generates 3GPP authentication and key agreement (authentication and key agreement, AKA) authorization authentication, user identification, session consistency, and subscription management.

The unified data repository stores and retrieves subscription data, policy data, common architecture data, and the like, and is used by a UDM, a policy control (policy control function, PCF) network element, and the NEF to obtain related data.

The EAS discovery function network element receives a DNS processing rule delivered by an SMF, processes a DNS request from a UE, and selects an appropriate EAS for the UE.

The user plane function network element is used for packet routing and forwarding, policy implementation, traffic reporting, and quality of service (quality of service, QoS) processing.

In FIG. 1C, the operator network may further include a network repository function (network repository function, NRF) network element and a policy control (policy control function, PCF) network element.

The network repository function network element may be configured to provide a network element discovery function, and provide, based on a request of another network element, network element information corresponding to a network element type. The network repository function network element further provides a network element management service, for example, network element registration, update, de-registration, and network element status subscription and push.

The policy control network element may be configured to obtain a policy subscribed to by a user from a UDM, and send the policy to an AMF.

Naf, Nnef, Neasdf, Nudm, Nudr, Namf, Nsmf, Npcf, and Nnrf in FIG. 1B and FIG. 1C are service-based interfaces provided by the AF, the NEF, the EASDF, the UDM, the UDR, the AMF, the SMF, the PCF, and the NRF respectively, and are used to invoke corresponding service-based operations. For meanings of these interfaces, refer to meanings defined in a 3^{rd} generation partnership project (3^{rd} generation partnership project, 3GPP) standard agreement.

It may be understood that the foregoing network elements or functions may be network elements in a hardware device, may be software functions running on dedicated hardware, or may be virtualized functions instantiated on a platform (for example, a cloud platform). Optionally, the network element or function may be implemented by one device, or may be jointly implemented by a plurality of devices, or may be a functional module in one device. This is not specifically limited in embodiments of this application.

The mobility management network element, the application function network element, the unified data management network element, the network exposure function network element, and the EAS discovery function network element in embodiments of this application may be network elements that respectively have functions of the mobility management network element, the application function network element, the unified data management network element, the network exposure function network element, and the EAS discovery function network element shown in FIG. 1B or FIG. 1C. For ease of description, in subsequent descriptions of this application, the mobility management network element, the application function network element, the unified data management network element, the network exposure function network element, and the EAS discovery function network element are respectively referred to as an AMF, an AF, a UDM, an NEF, and an EASDF. It should be noted that in future communication, the mobility management network element, the application function network element, the unified data management network element, the network exposure function network element, and the EAS discovery function network element may still be referred to as the AMF, the AF, the UDM, the NEF, and the EASDF, or may have other names. This is not limited in this application. The AMF, the AF, the UDM, the NEF, and the EASDF that subsequently appear in this application may be replaced with the mobility management network element, the application function network element, the unified data management network element, the network exposure function network element, and the EAS discovery function network element.

The radio access network device may be a base station (base station), an evolved base station (evolved NodeB, eNodeB), a transmission reception point (transmission reception point, TRP), a next generation base station (next generation NodeB, gNB) in a 5G mobile communication system, a next generation base station in a 6G mobile communication system, a base station in a future mobile communication system, an access node in a wireless fidelity (wireless fidelity, Wi-Fi) system, or the like, or may be a module or a unit that completes some functions of a base station, for example, may be a central unit (central unit, CU), or may be a distributed unit (distributed unit, DU). The radio access network device may be a macro base station, may be a micro base station or an indoor base station, or may be a relay node, a donor node, or the like. In FIG. 1B or FIG. 1C, a RAN is used to represent the radio access network device. A specific technology and a specific device form that are used by the radio access network device are not limited in embodiments of this application.

The terminal may alternatively be referred to as a terminal device, a user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The radio access network device and the terminal may be at fixed locations, or may be movable. The radio access network device and the terminal may be deployed on land, including indoor, outdoor, handheld, or vehicle-mounted; may be deployed on water; or may be deployed on an aircraft, a balloon, and an artificial satellite in the air. Application scenarios of the radio access network device and the terminal are not limited in embodiments of this application.

A data network is a network outside the operator network. In FIG. 1A, FIG. 1B, or FIG. 1C, the DN is used to identify the data network. The operator network may access a plurality of data networks, a plurality of services may be deployed on the data network, and a data service and/or a voice service may be provided for the terminal. For example, the data network is a private network of a smart factory, a sensor installed in a workshop of the smart factory may be a terminal, a control server of the sensor is deployed in the data network, and the control server may provide a service for the sensor. The sensor may communicate with the control server, to obtain instructions of the control server, transmit collected sensor data to the control server based on the instructions. For another example, the data network is an internal office network of a company, a mobile phone or a computer of an employee of the company may be a terminal, and the mobile phone or the computer of the employee may access information, data resources, and the like on the internal office network of the company.

A 5G system in a 3^{rd} generation partnership project (3^{rd} generation partnership project, 3GPP) enhances support for an edge computing scenario standard, and provides, mainly in terms of EAS discovery/rediscovery, edge application migration, and local capability exposure, a capability of a 5G network to support edge computing.

An EAS discovery function (EAS discovery function, EASDF) network element is introduced in a 3GPP mobile edge computing (multi-access edge computing, MEC) architecture to process an edge service discovery task. In a process of creating a protocol data unit (protocol data unit, PDU) session, an SMF selects one EASDF for the PDU session, and configures an IP address of the EASDF for a terminal device as a domain name server (domain name server, DNS). The SMF creates/updates a DNS processing rule to the EASDF in a form of a DNS context. When the terminal device initiates a DNS request, the EASDF returns an EAS IP to the terminal device according to the DNS processing rule configured by the SMF for the EASDF. The EASDF may also forward the EAS IP to a local DNS (local DNS) server for processing.

In an edge computing scenario, sometimes a common EAS needs to be selected for a group of terminal devices. For example, in a multi-user low-latency game scenario, registration information and game information of a plurality of terminal devices are stored in a same EAS. Therefore, the plurality of terminal devices need to access the same EAS. Because the terminal device has mobility, the terminal device in the terminal device group may dynamically join in or leave the terminal device group. Therefore, the common EAS selected for the group of terminal devices may need to be dynamically adjusted, to enable the common EAS accessed by the terminal device group to be optimal.

It may be understood that the optimal common EAS may be understood as an EAS closest to locations of most terminal devices. The EAS helps improve performance of serving the terminal device group, for example, has minimum average latency of accessing the EAS by the terminal device group. When the common EAS changes, edge application migration needs to be performed for the group of terminal devices, to ensure that all terminal devices in the terminal device group access a migrated EAS.

Currently, in a process of an EAS rediscovery procedure, when a local PDU session anchor (local PDU session anchor, L-PSA) is inserted/modified/removed, or an application function (application function, AF) network element triggers the EAS rediscovery procedure, the SMF modifies the PDU session mainly by adding an EAS rediscovery indicator to a PDU session modification instruction to clear a DNS cache in the UE.

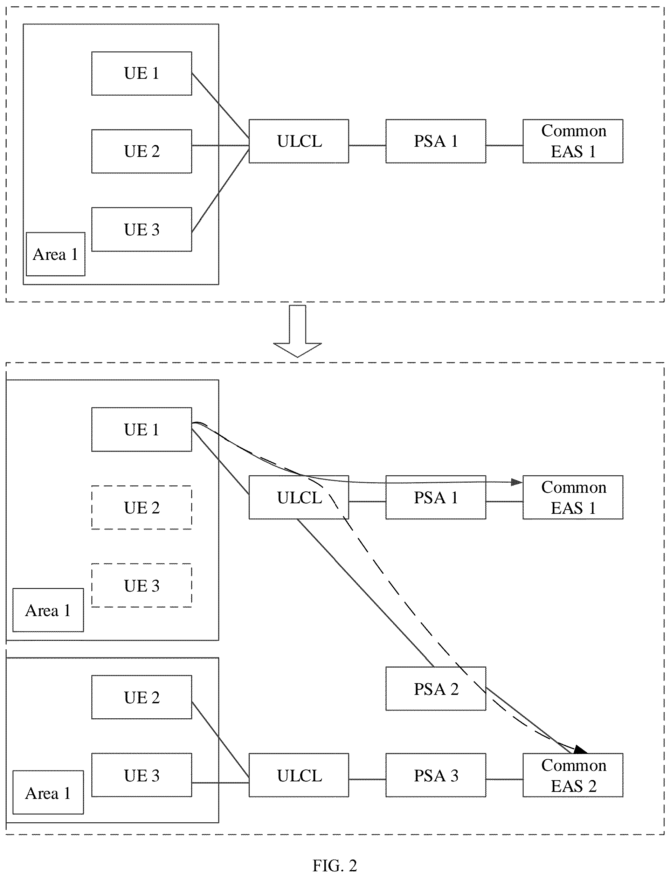

Refer to FIG. 2. In a scenario of an uplink classifier (uplink classifier, ULCL), a UE 1, a UE 2, and a UE 3 belong to one UE group. The UE 1, the UE 2, and the UE 3 are in an area 1 and access a common EAS, that is, a common EAS 1. The UE 2 and the UE 3 move to an area 2, and edge application migration occurs. A 5G core (5G core, 5GC) selects a new common EAS, that is, a common EAS 2, for the UE group. The SMF may insert/modify/remove an L-PSA, and clear DNS caches of the UE 1, the UE 2, and the UE 3. However, an application layer connection between the UE 1 in the UE group and the old common EAS is not broken. Consequently, the UE group cannot simultaneously access the common EAS 2. When the application layer connection is broken, the UE 1 can re-initiate a DNS request to connect to the common EAS 2.

In view of this, an embodiment of this application provides a method for selecting an edge application server. In the method, an AF may subscribe to, from a core network device, an event that an EAS of one or more terminal devices changes. When detecting that the EAS of the one or more terminal devices changes, the core network device may send first notification information to the AF. The first notification information may include a first identifier. The first identifier may indicate that the EAS of the one or more terminal devices changes, and the first notification information indicates that an application of the one or more terminal devices is migrated to a first EAS. Based on this solution, the core network device may send the first notification information to the AF, to indicate, to the AF, that the EAS of the one or more terminal devices changes. In this way, the AF may trigger the terminal device to disconnect from an application layer, and access the first EAS.

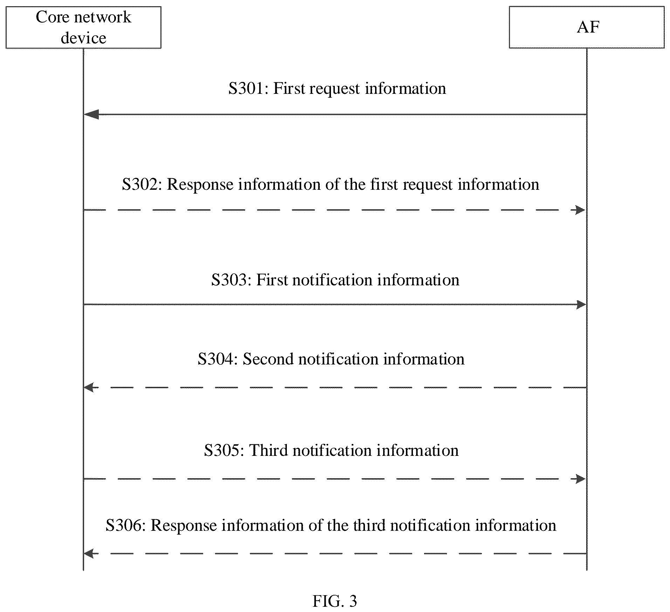

FIG. 3 is an example flowchart of a method for selecting an edge application server according to an embodiment of this application. The method may include the following operations.

S301: An AF sends first request information to a core network device.

Correspondingly, the core network device receives the first request information from the AF.

The first request information may include a first identifier, and the first request information may be used to subscribe to an event that an EAS of one or more terminal devices changes.

In a possible implementation, the first identifier may be an event identifier, and the event identifier may be an identifier of the event subscribed to by the AF. For example, the core network device may expose, to the AF, the event that "the EAS changes", and the identifier of the event may be the first identifier. Therefore, the AF may subscribe to the event from the core network device, and the core network device may send first notification information to the AF when the event occurs, in other words, when the EAS of the terminal device changes. Based on this, optionally, the embodiment shown in FIG. 3 may further include the following operations. Optionally, the first identifier may alternatively be an identifier of a user plane event.

In another possible implementation, the first identifier may be used to subscribe to first notification information. In other words, the first identifier may be used to subscribe to the first notification information sent by the core network device to the AF when the EAS of the one or more terminal devices changes. In this embodiment of this application, an example in which the first identifier is used to subscribe to the event is used for description.

In a possible implementation, the event that the EAS changes in the embodiment shown in FIG. 3 may be monitored by the core network device, for example, may be monitored by an SMF or a UDM included in the core network device. The core network device may notify the AF of the event when the EAS of the one or more terminal devices changes.

In a possible case, the first request information may include a second identifier, and the second identifier may indicate the one or more terminal devices. For example, the first identifier may be a terminal device identifier of the one or more terminal devices, for example, a UE ID. For another example, the second identifier may be an identifier of a terminal device group including the one or more terminal devices, for example, a UE group ID or an association ID. The first request information may be used to subscribe to an event that an EAS of the terminal device group or the terminal device indicated by the second identifier changes.

For example, the first request information may include the identifier of the terminal device group. In this case, the first request information may be used to subscribe to an event that a common EAS of the terminal device group changes. When the common EAS of the terminal device group changes, the core network device may notify the AF of the event, for example, send the first notification information to the AF. For another example, the first request information may include the identifier of the terminal device. In this case, the first request information may be used to subscribe to the event that the EAS of the terminal device changes. When the EAS of the terminal device changes, the core network device may notify the AF of the event, for example, send the first notification information to the AF.

In another possible case, the first request information may not indicate to monitor an event that an EAS of terminal devices changes. For example, the first request information may carry one piece of indication information, for example, indication information of any terminal device (any UE), to subscribe to, from the core network device, an event that an EAS of any terminal device changes. In this way, when detecting that an EAS of any terminal device changes, the core network device may notify the AF of the event, for example, send the first notification information to the AF. Optionally, the core network device may send, to the AF, an identifier of the terminal device or a terminal device group on which the event occurs.

Optionally, the first request information may be a subscription request (Nnef_Trafficlnfuence_Subscribe Request).

In an example, in S301, the AF may send the first request information to an NEF included in the core network device. The NEF may send the first request information to a network element that monitors the event that the EAS changes. For example, the NEF may send the first request information to the SMF or the UDM.

In another example, in S301, the AF may send the first request information to the SMF included in the core network, and the SMF may be a network element that monitors the event that the EAS changes.

Optionally, the embodiment shown in FIG. 3 may further include the following operation S302.

S302: The core network device sends response information of the first request information to the AF.

Correspondingly, the AF receives the response information of the first request information from the core network device.

The response information of the first request information may indicate that the event that the EAS of the one or more terminal devices changes is already subscribed to. In a possible case, the response information of the first request information may carry the first identifier. Optionally, the response information of the first request information may alternatively carry the identifier of the terminal device or the identifier of the terminal device group, that is, the second identifier.

In an example, in S302, the SMF or the UDM may send the response information of the first request information to the NEF. The NEF sends the response information of the first request information to the AF. In another example, in S302, the SMF may send the response information of the first request information to the AF.

S303: The core network device sends the first notification information to the AF.

Correspondingly, the AF receives the first notification information from the core network device.

The first notification information may include the first identifier. The first identifier may indicate that the EAS of the one or more terminal devices changes. The first notification information may indicate to migrate an application of the one or more terminal devices to a first EAS. The first EAS may be an EAS selected for the one or more terminal devices. Optionally, the first notification information further includes the second identifier and/or IP information of the first EAS.

Based on the foregoing solution, the AF may subscribe to, from the core network device, the event that the EAS of the terminal device changes, so that when the EAS of the terminal device changes, the AF can receive the first notification information from the core network device. The AF may trigger the terminal device to disconnect from an application layer, so that the terminal device initiates a DNS request, to enable the terminal device to access a new EAS.

Optionally, the AF may determine, based on the first notification information, whether the application of the one or more terminal devices can be migrated to the first EAS. The embodiment shown in FIG. 3 may further include the following operation.

S304: The AF sends second notification information to the core network device.

Correspondingly, the core network device receives the second notification information from the AF.

For example, the AF may determine whether the first EAS can support edge application migration. The AF may perform S304 when the first EAS supports the edge application migration. Optionally, the second notification information may include the second identifier and/or the IP information of the first EAS.

It should be noted that a method for determining, by the AF, whether the first EAS supports the edge application migration is not specifically limited in this application.

When the first EAS supports the edge application migration, the embodiment shown in FIG. 3 may further include the following operation S305.

S305: The core network device sends third notification information to the AF.

Correspondingly, the AF receives the third notification information from the core network device.

The third notification information may indicate that a user plane path of the first EAS is already configured. For example, when the core network device determines that the first EAS can support the edge application migration, the core network device may insert/modify/delete an L-PSA on a user plane of the first EAS. Optionally, the third notification information may include the second identifier and/or the IP information of the first EAS.

Optionally, the embodiment shown in FIG. 3 may further include S306.

S306: The AF sends response information of the third notification information to the core network device.

Correspondingly, the core network device receives the response information of the third notification information from the AF.

After receiving the third notification information, the AF may send the response information of the third notification information to the core network device. The AF may determine that the user plane path of the first EAS is already configured, and may be redirected to the first EAS or break an application layer connection to the terminal device.

It should be noted that a method for selecting an EAS for one or more terminal devices is not limited in this embodiment of this application. For example, the core network device may select the EAS for the one or more terminal devices. For another example, a third-party device may select the EAS for the one or more terminal devices. The following describes the method for selecting the EAS by the core network device for the one or more terminal devices.

In a possible implementation, an EASDF may select the EAS for the one or more terminal devices. The SMF may send location information of the one or more terminal devices to the EASDF. The location information of the one or more terminal devices may be determined by the SMF.

In a possible case, when the location information of the one or more terminal devices changes, the SMF may send the location information of the one or more terminal devices to the EASDF. For example, the SMF may locate the one or more terminal devices, and send the location information of the one or more terminal devices to the EASDF when the location information of the one or more located terminal devices changes. It should be noted that a method for obtaining the location information of the terminal device by the SMF is not specifically limited in this application.

In another possible case, the one or more terminal devices may form a terminal device group. When a member in the terminal device group changes, the SMF may send the location information of the one or more terminal devices included in the terminal device group to the EASDF. For example, when determining that a terminal device that joins in or leaves the terminal device group exists, the SMF sends the location information of the one or more terminal devices included in the terminal device group to the EASDF.

Optionally, the SMF may send the second identifier to the EASDF. Optionally, the SMF may send, to the EASDF, an FQDN corresponding to the one or more terminal devices.

It may be understood that the SMF or the UDM/a UDR may store a UE group ID, a UE ID of each terminal device in a terminal device group indicated by the UE group ID, and an FQDN corresponding to each terminal device in the terminal device group. The SMF may obtain a correspondence among the FQDN, the UE group ID, and the UE ID based on the second identifier, and the SMF may obtain the FQDN based on the correspondence.

In a possible implementation, the SMF may send second indication information to the EASDF, and the second indication information may indicate that the EAS of the one or more terminal devices changes. For example, the second indication information may be an EAS rediscovery (rediscovery) indicator (indicator).

Optionally, the SMF may send a DNS context update request (Neasdf DNSContext Update Request) to the EASDF. The DNS context update request may carry the location information of the one or more terminal devices. Optionally, the DNS context update request may further carry the FQDN and the second identifier.

After receiving the location information of the one or more terminal devices, the EASDF may select the first EAS for the one or more terminal devices, and send first information to the SMF. The first information may include the FQDN and the IP information of the first EAS. Optionally, the EASDF may send the second identifier to the SMF.

For example, the EASDF may determine one or more EASs for the one or more terminal devices based on the location information of the one or more terminal devices. In a possible case, the one or more terminal devices may form a terminal device group, and the EASDF may determine a common EAS for the terminal device group. In another possible case, the EASDF may determine the EAS for the one or more terminal devices one by one.

It should be noted that a method for determining the EAS by the EASDF is not specifically limited in this embodiment of this application.

In a possible implementation, the EASDF may send a DNS context update response (Neasdf DNSContext Update Response) to the SMF. The DNS context update response may carry the FQDN and the IP information of the first EAS. Optionally, the DNS context update response may further carry the second identifier, for example, the UE ID and/or the UE group ID.

Based on the foregoing solution, the core network device may select the first EAS for the one or more terminal devices. Therefore, the core network device may determine whether the EAS of the one or more terminal devices changes.

In the embodiment shown in FIG. 3, because different network elements monitor the event corresponding to the first identifier, the embodiment shown in FIG. 3 has different implementations. The following describes, by using Manner 1 and Manner 2, the method for selecting the edge application server provided in the embodiment shown in FIG. 3.

Manner 1: A monitoring network element is an SMF.

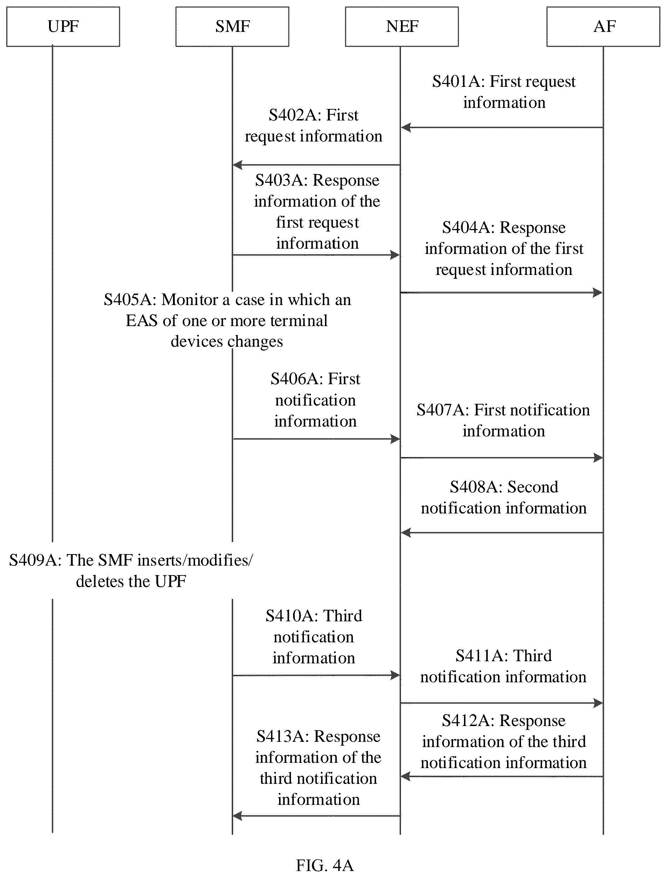

FIG. 4A is an example flowchart of a method for selecting an edge application server according to an embodiment of this application. The method may include the following operations.

S401A: An AF sends first request information to an NEF.

Correspondingly, the NEF receives the first request information from the AF.

S401A may be a possible implementation of S301. The first request information may include a first identifier. The first request information may be used to subscribe to an event that an EAS of one or more terminal devices changes, or the first request information may be used to subscribe to an event that a common EAS of a terminal device group including the one or more terminal devices changes.

In a possible case, the first request information in S401A may be a traffic influence subscription request (Nnef_TrafficInfluence_Subscribe Request).

S402A: The NEF sends the first request information to an SMF.

Correspondingly, the SMF receives the first request information from the NEF.

S402A may be a possible implementation of S300A. For information carried in the first request information, refer to related descriptions in S401.

In a possible case, the first request information in S402A may be an event exposure subscription request (Nsmf_EventExposure_Subscribe Request).

Optionally, the embodiment shown in FIG. 4A may further include the following operations S403A and S404A.

S403A: The SMF sends response information of the first request information to the NEF.

Correspondingly, the NEF receives the response information of the first request information from the SMF.

S403A may be a possible implementation of S302. The response information of the first request information may include the first identifier.

S404A: The NEF sends the response information of the first request information to the AF.

Correspondingly, the AF receives the response information of the first request information from the NEF.

S404A may be a possible implementation of S302. The response information of the first request information may include the first identifier.

S405A: The SMF monitors a case in which the EAS of the one or more terminal devices changes.

S406A: The SMF sends first notification information to the NEF.

Correspondingly, the NEF receives the first notification information from the SMF.

S406A may be a possible implementation of S303. The first notification information may carry the first identifier. Optionally, the first notification information may carry IP information of a first EAS.

In a possible case, the first notification information may be an event exposure early notification message (Nsmf_EventExposure_Notify). In another possible implementation, the first notification information may be a late notification (Nsmf_EventExposure_Notify).

S407A: The NEF sends the first notification information to the AF.

Correspondingly, the AF receives the first notification information from the NEF.

S407A may be a possible implementation of S303. The first notification information may carry the first identifier. Optionally, the first notification information may carry the IP information of the first EAS.

In a possible case, the first notification information may be a traffic influence early notification (Nnef_TrafficInfluence_Notify). In another possible case, the first notification information may be a late notification (Nnef_TrafficInfluence_Notify).

Optionally, the embodiment shown in FIG. 4A may further include S408A to S411A.

S408A: The AF sends second notification information to the NEF.

Correspondingly, the NEF receives the second notification information from the AF.

S408A may be a possible implementation of S304. The second notification information indicates whether the first EAS supports application migration. In a possible case, the second notification information may be edge application migration information (Nnef_TrafficInfluence_AppRelocationInfo).

S409A: The SMF inserts/modifies/deletes a UPF.

S410A: The SMF sends third notification information to the NEF.

Correspondingly, the NEF receives the third notification information from the SMF.

S410A may be a possible implementation of S305. The third notification information may include the first identifier. The third notification information may indicate that a user plane path of the first EAS is already configured. Optionally, the third notification information may further include the IP information of the first EAS.

In a possible case, the third notification information may be a late notification (Nsmf_EventExposure_Notify).

S411A: The NEF sends the third notification information to the AF.

Correspondingly, the AF receives the third notification information from the NEF.

S411A may be a possible implementation of S305. In a possible case, the third notification information may be a late notification (Nnef_TrafficInfluence _Notify). The third notification information may include the first identifier. Optionally, the third notification information may further include the IP information of the first EAS.

Optionally, the embodiment shown in FIG. 4A may further include the following operations S412A and S413A.

S412A: The AF sends response information of the third notification information to the NEF.

Correspondingly, the core network device receives the response information of the third notification information from the AF.

S412A may be a possible implementation of S306. After receiving the third notification information, the AF may send the response information of the third notification information to the core network device. In a possible case, the response information of the third notification information may be edge application migration information (Nnef_TrafficInfluence_AppRelocationInfo).

S413A: The NEF sends the response information of the third notification information to the SMF.

Correspondingly, the SMF receives the response information of the third notification information from the NEF.

S413A may be a possible implementation of S306. In a possible case, the response information of the third notification information may be the edge application migration information (Nnef_TrafficInfluence_AppRelocationInfo).

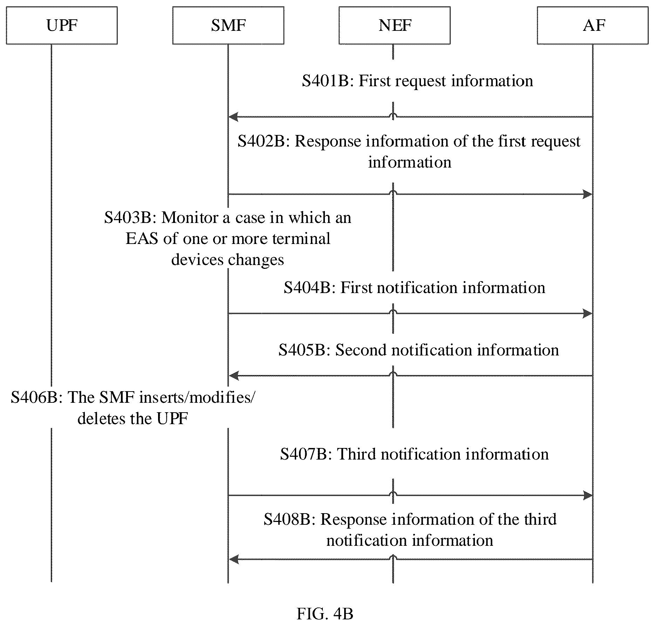

In the embodiment shown in FIG. 4A, the AF may subscribe to, from the SMF via the NEF, an event corresponding to the first identifier. The following describes, by using FIG. 4B, a technical solution in which the AF subscribes to, from the SMF, the event corresponding to the first identifier.

FIG. 4B is an example flowchart of a method for selecting an edge application server according to an embodiment of this application. The method may include the following operations.

S401B: An AF sends first request information to an SMF.

Correspondingly, the SMF receives the first request information from the AF.

S401B may be a possible implementation of S301. The first request information may include a first identifier. The first request information may be used to subscribe to an event that an EAS of one or more terminal devices changes, or the first request information may be used to subscribe to an event that a common EAS of a terminal device group including the one or more terminal devices changes.

In a possible case, the first request information in S401B may be an event exposure subscription request (Nsmf_EventExposure_Subscribe Request).

Optionally, the embodiment shown in FIG. 4B may further include the following operation S402B.

S402B: The SMF sends response information of the first request information to the AF.

Correspondingly, the AF receives the response information of the first request information from the SMF.

S402B may be a possible implementation of S302. The response information of the first request information may include the first identifier.

S403B: The SMF monitors a case in which the EAS of the one or more terminal devices changes.

The SMF may determine a 5GC. For example, an EASDF selects a first EAS for the one or more terminal devices.

S404B: The SMF sends first notification information to the AF.

Correspondingly, the AF receives the first notification information from the SMF.

S404B may be a possible implementation of S303. The first notification information may carry the first identifier. Optionally, the first notification information may carry IP information of the first EAS.

In a possible case, the first notification information may be a traffic influence early notification (Nnef_TrafficInfluence_Notify). In another possible case, the first notification information may be a late notification (Nnef_TrafficInfluence_Notify).

Optionally, the embodiment shown in FIG. 4B may further include S405B to S408B.

S405B: The AF sends second notification information to the SMF.

Correspondingly, the SMF receives the second notification information from the AF.

S405B may be a possible implementation of S304. The second notification information indicates whether the first EAS supports application migration. In a possible case, the second notification information may be edge application migration information (Nsmf_TrafficInfluence_AppRelocationInfo).

S406B: The SMF inserts/modifies/deletes a UPF.

For example, the SMF may insert/modify/delete an L-PSA on a user plane based on the first EAS.

S407B: The SMF sends third notification information to the AF.

Correspondingly, the AF receives the third notification information from the SMF.

S407B may be a possible implementation of S305. The third notification information may include the first identifier. The third notification information may indicate that a user plane path of the first EAS is already configured. Optionally, the third notification information may further include the IP information of the first EAS.

In a possible case, the third notification information may be a late notification (Nsmf_EventExposure _Notify).

Optionally, the embodiment shown in FIG. 4B may further include the following operation S408B.

S408B: The AF sends response information of the third notification information to the SMF.

Correspondingly, the SMF receives the response information of the third notification information from the AF.

S408B may be a possible implementation of S306. After receiving the third notification information, the AF may send the response information of the third notification information to the SMF. In a possible case, the response information of the third notification information may be edge application migration information (Nnef_TrafficInfluence_AppRelocationInfo).

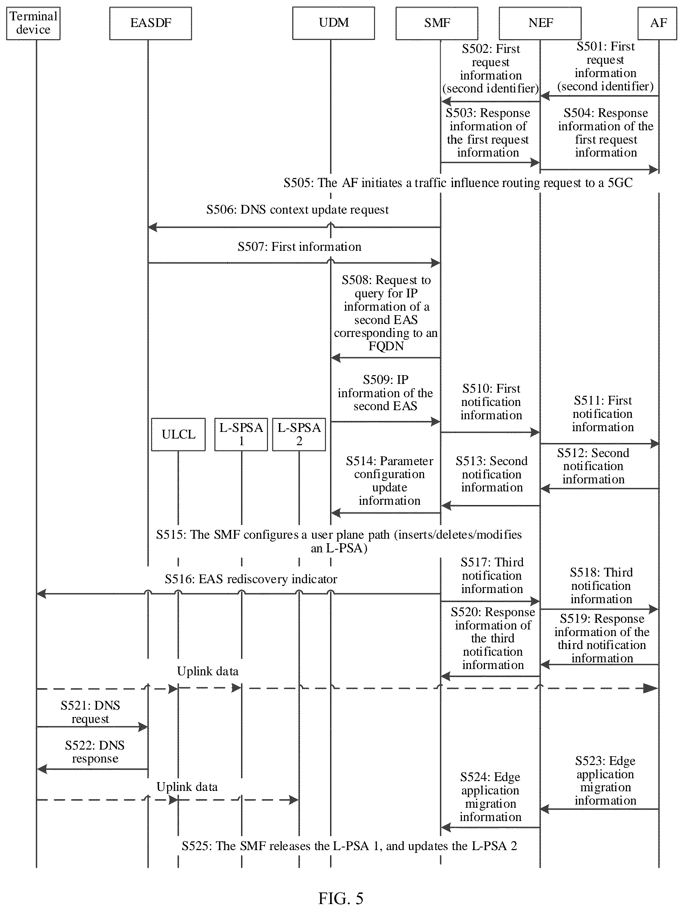

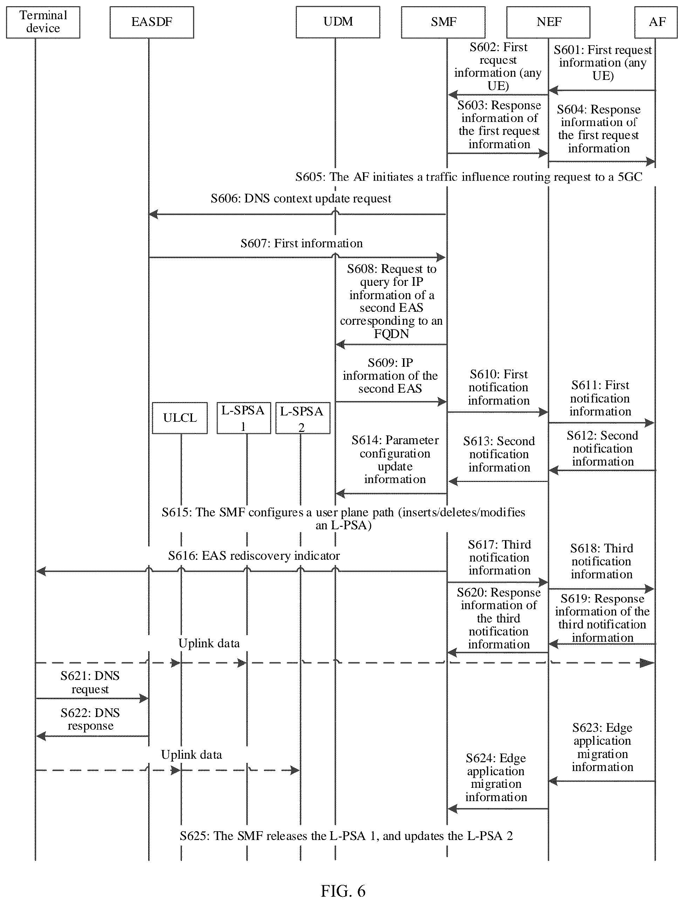

In embodiments shown in FIG. 4A and FIG. 4B, the AF may trigger the terminal device to break an application layer connection, migrate an application of the terminal device to the first EAS, and send the second notification information to the SMF or the NEF. It may be understood that, in embodiments shown in FIG. 4A and FIG. 4B, a manner in which the 5GC determines that the EAS of the terminal device changes is not limited. The following describes, by using FIG. 5 and FIG. 6, a method for selecting an EAS by a 5GC for a terminal device.

Case 1: The first request information includes a second identifier.

FIG. 5 is an example flowchart of a method for selecting an edge application server according to an embodiment of this application. The method may include the following operations.

S501: An AF sends first request information to an NEF.

Correspondingly, the NEF receives the first request information from the AF.

S501 may be a possible implementation of S301. The first request information may include a first identifier and a second identifier. The first request information may be used to subscribe to an event that an EAS of a terminal device indicated by the second identifier changes, or the first request information may be used to subscribe to an event that a common EAS of a terminal device group indicated by the second identifier changes.

In a possible case, the first request information in S501 may be a traffic influence subscription request (Nnef_TrafficInfluence_Subscribe Request).

S502: The NEF sends the first request information to an SMF.

Correspondingly, the SMF receives the first request information from the NEF.

S502 may be a possible implementation of S302. For information carried in the first request information, refer to related descriptions in S501.

In a possible case, the first request information in S502 may be an event exposure subscription request (Nsmf_EventExposure_Subscribe Request).

S503: The SMF sends response information of the first request information to the NEF.

Correspondingly, the NEF receives the response information of the first request information from the SMF.

S503 may be a possible implementation of S302. The response information of the first request information may include the first identifier and the second identifier.

S504: The NEF sends the response information of the first request information to the AF.

Correspondingly, the AF receives the response information of the first request information from the NEF.

S504 may be a possible implementation of S302. The response information of the first request information may include the first identifier and the second identifier.

Optionally, the embodiment shown in FIG. 5 may further include the following operation S505.

S505: The AF initiates a traffic influence routing request to a 5GC.

The traffic influence routing request in S505 may indicate, to the 5GC, that a member joins in/leaves the terminal device group indicated by the second identifier. In other words, the AF may indicate, to the 5GC, that a member in the terminal device group changes, so that the 5GC determines whether to update the common EAS of the terminal device group.

Optionally, the embodiment shown in FIG. 5 may further include the following operations S506 and S507.

S506: The SMF sends a DNS context update request to an EASDF.

Correspondingly, the EASDF receives the DNS context update request from the SMF.

The SMF may send the DNS context update request (Neasdf_DNSContext_Update Request) to the EASDF when detecting that location information of the terminal device changes or the member in the terminal device group changes, so that the EASDF selects an EAS for the terminal device or the terminal device group.

In a possible case, the SMF may query for, based on the second identifier, an FQDN corresponding to the second identifier stored in a UDM/a UDR. Optionally, when the second identifier indicates a UE group ID (an association ID), the SMF may query for, based on the second identifier, an ID of each terminal device included in the terminal device group indicated by the second identifier stored in the UDM/the UDR.

In another possible case, a correspondence among a UE ID, a UE group ID (an association ID), and an FQDN may alternatively be cached in the SMF. The SMF may obtain the cached FQDN corresponding to the second identifier. Optionally, when the second identifier indicates the UE group ID (the association ID), the SMF may obtain a cached ID of each terminal device included in the terminal device group indicated by the second identifier.

The DNS context update request in S506 may carry the FQDN, the location information of the terminal device, and the UE ID. Optionally, when the second identifier indicates the UE group ID (the association ID), the DNS context update request may further carry the UE group ID (the association ID). The UE ID may be a UE ID of each terminal device included in the terminal device group, and the location information of the terminal device may be location information of each terminal device included in the terminal device group.

Optionally, the DNS context update request may further carry second indication information. The second indication information may indicate that the EAS of the terminal device changes. For example, when the second identifier indicates the UE ID, the second indication information may indicate that the EAS of the terminal device indicated by the second identifier changes. For another example, when the second identifier indicates the UE group ID (the association ID), the second indication information may indicate that the common EAS of the terminal device group indicated by the second identifier changes. In a possible case, the second indication information may be EAS rediscovery (EAS rediscovery indicator). The second indication information may indicate the EASDF to determine a new EAS for the terminal device based on the second indication information, and the terminal device does not need to initiate a DNS request.

S507: The EASDF sends first information to the SMF.

Correspondingly, the SMF receives the first information from the EASDF.

The first information may include the FQDN and IP information of a first EAS. The first EAS may be an EAS selected by the EASDF for the terminal device or the terminal device. Optionally, the first information may further include the identifier of the terminal device. Optionally, when the second identifier indicates the UE group ID (the association ID), the first information may further include the UE group ID (the association ID), and the identifier of the terminal device may be a UE ID of each terminal device included in the terminal device group.

In a possible case, the first information may be a DNS context update response (Neasdf_DNSContext_Update Response).

Optionally, the embodiment shown in FIG. 5 may further include the following operation S508.

S508: The SMF requests, from the UDM, to query for IP information of a second EAS corresponding to the FQDN.

The UDM stores the IP information of the second EAS of the terminal device. The SMF may request, from the UDM based on the FQDN, the UE group ID, or the UE ID, to query for the IP information of the second EAS of the terminal device or the terminal device group. The second EAS may be an EAS that is providing a service for the terminal device or the terminal device group.

S509: The UDM sends the IP information of the second EAS to the SMF.

Correspondingly, the SMF receives the IP information of the second EAS from the UDM.

Optionally, the SMF may compare the IP information of the first EAS with the IP information of the second EAS. If the IP information of the two EASs is different from each other, the SMF may determine that the EASDF selects a new EAS.

S510: The SMF sends first notification information to the NEF.

Correspondingly, the NEF receives the first notification information from the SMF.

S510 may be a possible implementation of S303. The first notification information may carry the first identifier. Optionally, the first notification information may further include the second identifier and/or the IP information of the first EAS.

In a possible case, the first notification information may be an event exposure notification (Nsmf_EventExposure _Notify).

S511: The NEF sends the first notification information to the AF.

Correspondingly, the AF receives the first notification information from the NEF.

S511 may be a possible implementation of S303. In a possible case, the first notification information may be a traffic influence early notification (Nnef_TrafficInfluence_Notify).

Optionally, the embodiment shown in FIG. 5 may further include the following operation S512.

S512: The AF sends second notification information to the NEF.

Correspondingly, the NEF receives the second notification information from the AF.

S512 may be a possible implementation of S305. The second notification information indicates whether the first EAS supports application migration. In a possible case, the second notification information may be edge application migration information (Nnef_Traffic Influence_AppRelocationInfo).

S513: The NEF sends the second notification information to the SMF.

Correspondingly, the SMF receives the second notification information from the NEF.

S513 may be a possible implementation of S305. In a possible case, the second notification information may be edge application migration information (Nsmf_TrafficInfluence_AppRelocationInfo).

If in S512 and S513, the second notification information indicates that the first EAS supports the application migration, the embodiment shown in FIG. 5 may further include the following operation S514.

S514: The SMF may send parameter configuration update information to the UDM.

Correspondingly, the UDM receives the parameter configuration update information (Nudm_ParameterProvision_Update) from the SMF. The parameter configuration update information may indicate the UDM to update the IP information of the EAS. The parameter configuration update information may include the second identifier and the IP information of the first EAS.

S515: The SMF configures a user plane path.

For example, the SMF may insert/modify/delete an L-PSA on a user plane based on the first EAS, for example, modify an L-PSA 1 to an L-PSA 2.

S516: The SMF sends an EAS rediscovery indicator to the terminal device.

Correspondingly, the terminal device receives the EAS rediscovery indicator from the SMF.

The EAS rediscovery indicator may include the FQDN.

S517: The SMF sends third notification information to the NEF.

Correspondingly, the NEF receives the third notification information from the SMF.

S517 may be a possible implementation of S305. The third notification information may include the first identifier. The third notification information may indicate that a user plane path of the first EAS is already configured. Optionally, the third notification information may include the second identifier and/or the IP information of the first EAS.

In a possible case, the third notification information may be a late notification (Nsmf_EventExposure _Notify).

S518: The NEF sends the third notification information to the AF.

Correspondingly, the AF receives the third notification information from the NEF.

S518 may be a possible implementation of S305. In a possible case, the third notification information may be a late notification (Nnef_TrafficInfluence Notify). The third notification information may include the first identifier. Optionally, the third notification information may include the second identifier and/or the IP information of the first EAS.

Optionally, the embodiment shown in FIG. 5 may further include the following operations S519 and S520.

S519: The AF sends response information of the third notification information to the NEF.

Correspondingly, a core network device receives the response information of the third notification information from the AF.

S519 may be a possible implementation of S306. After receiving the third notification information, the AF may send the response information of the third notification information to the core network device. In a possible case, the response information of the third notification information may be edge application migration information (Nnef_TrafficInfluence_AppRelocationInfo).

S520: The NEF sends the response information of the third notification information to the SMF.

Correspondingly, the SMF receives the response information of the third notification information from the NEF.

S520 may be a possible implementation of S306. In a possible case, the response information of the third notification information may be the edge application migration information (Nnef_TrafficInfluence_AppRelocationInfo).

Based on the foregoing operations, the AF may determine that the subscribed EAS of the terminal device changes, so that an application layer can notify the terminal device to send data to the first EAS. Uplink data is cached in the PSA 2. If the AF receives no IP information of the first EAS, the AF breaks an application layer connection to the terminal device, and triggers the terminal device to re-initiate the DNS request to obtain the IP information of the first EAS.

The embodiment shown in FIG. 5 may include the following operations S521 to S525.

S521: The terminal device sends the DNS request to the EASDF.

Correspondingly, the EASDF receives the DNS request from the terminal device.

S522: The EASDF sends a DNS response to the terminal device.

Correspondingly, the terminal device receives the DNS response from the EASDF.

The DNS response may include the IP information of the first EAS.

In this way, the terminal device may access the first EAS to perform a service.

S523: The AF sends the edge application migration information to the NEF.

Correspondingly, the NEF receives the application migration information (Nnef_TrafficInfluence_AppRelocationInfo) from the AF. The application migration information may indicate that an application of the terminal device is already migrated to the first EAS.

S524: The NEF sends the edge application migration information to the SMF.

Correspondingly, the SMF receives the edge application migration information (Nsmf_TrafficInfluence_AppRelocationInfo) from the NEF.

S525: The SMF releases the L-PSA 1, and updates the L-PSA 2.

Based on the foregoing operations, the terminal device may send the uplink data to the first EAS, and perform a service by using the first EAS.

Based on the foregoing solution, the 5GC notifies the AF of the terminal device whose edge application needs to be migrated, and the AF triggers the terminal device to establish a connection to the migrated first EAS, to ensure that the terminal device can access the first EAS.

Case 2: The first request information does not include a second identifier.

FIG. 6 is an example flowchart of a method for selecting an edge application server according to an embodiment of this application. The method may include the following operations.

S601: An AF sends first request information to an NEF.

Correspondingly, the NEF receives the first request information from the AF.

S601 may be a possible implementation of S301. The first request information may include a first identifier. The first request information may be used to subscribe to an event that an EAS of a terminal device changes. Optionally, the first request information may carry an indication of any UE, in other words, the first request information does not limit a range of the terminal device, and may subscribe to time at which an EAS of any terminal device changes.

In a possible case, the first request information in S601 may be a traffic influence subscription request (Nnef_TrafficInfluence_Subscribe Request).

S602: The NEF sends the first request information to an SMF.

Correspondingly, the SMF receives the first request information from the NEF.

S602 may be a possible implementation of S301. For information carried in the first request information, refer to related descriptions in S601.

In a possible case, the first request information in S602 may be an event exposure subscription request (Nsmf_EventExposure_Subscribe Request).

S603: The SMF sends response information of the first request information to the NEF.

Correspondingly, the NEF receives the response information of the first request information from the SMF.

S603 may be a possible implementation of S302. The response information of the first request information may include the first identifier.

S604: The NEF sends the response information of the first request information to the AF.

Correspondingly, the AF receives the response information of the first request information from the NEF.

S604 may be a possible implementation of S302. The response information of the first request information may include the first identifier.

Optionally, the embodiment shown in FIG. 6 may further include the following operation S605.

S605: The AF initiates a traffic influence routing request to a 5GC.

The traffic influence routing request in S605 may indicate, to the 5GC, that a member joins in/leaves a terminal device group. In other words, the AF may indicate, to the 5GC, that a member in the terminal device group changes, so that the 5GC determines whether to update a common EAS of the terminal device group.

Optionally, the embodiment shown in FIG. 6 may further include the following operations S606 and S607.

S606: The SMF sends a DNS context update request to an EASDF.

Correspondingly, the EASDF receives the DNS context update request from the SMF.

The SMF may send the DNS context update request (Neasdf_DNSContext_Update Request) to the EASDF when detecting that location information of the terminal device served by the SMF changes or the member in the terminal device group changes, so that the EASDF selects an EAS for the terminal device or the terminal device group.

In a possible case, the SMF may query for, based on a UE ID of a served terminal device or a UE group ID (an association ID) of the terminal device group whose member changes, an FQDN corresponding to the UE ID or the UE group ID (the association ID) stored in a UDM/a UDR.

In another possible case, a correspondence among a UE ID, a UE group ID (an association ID), and an FQDN may alternatively be cached in the SMF. The SMF may obtain the cached corresponding FQDN based on a UE ID of a served terminal device or a UE group ID (an association ID) of the terminal device group whose member changes.

The DNS context update request in S606 may carry the FQDN, the location information of the terminal device, and the UE ID. Optionally, the DNS context update request may further carry the UE group ID, the UE ID may be a UE ID of each terminal device included in the terminal device group, and the location information of the terminal device may be location information of each terminal device included in the terminal device group.

Optionally, if location information of terminal devices in a plurality of terminal device groups changes/members in the plurality of terminal device groups change, messages are separately sent based on different terminal device groups, or a message includes information about the plurality of terminal device groups.

Optionally, the DNS context update request may further carry second indication information. The second indication information may indicate that the EAS of the terminal device changes. For example, when a second identifier indicates the UE ID, the second indication information may indicate that the EAS of the terminal device indicated by the second identifier changes. For another example, when the second identifier indicates the UE group ID (the association ID), the second indication information may indicate that the common EAS of the terminal device group indicated by the second identifier changes. In a possible case, the second indication information may be EAS rediscovery (EAS rediscovery indicator). The second indication information may indicate the EASDF to determine a new EAS for the terminal device based on the second indication information, and the terminal device does not need to initiate a DNS request.

Optionally, the embodiment shown in FIG. 6 may further include the following operation S607.

S607: The EASDF sends first information to the SMF.

Correspondingly, the SMF receives the first information from the EASDF.

The first information may include the FQDN and IP information of a first EAS. The first EAS may be an EAS selected by the EASDF for the terminal device or the terminal device. Optionally, the first information may further include the UE ID and/or the UE group ID.

In a possible case, the first information may be a DNS context update response (Neasdf_DNSContext_Update Response).

Optionally, the embodiment shown in FIG. 6 may further include the following operation S608.

S608: The SMF requests, from the UDM, to query for IP information of a second EAS corresponding to the FQDN.

The UDM stores the IP information of the second EAS of the terminal device. The SMF may request, from the UDM based on the FQDN, the UE group ID, or the UE ID, to query for the IP information of the second EAS of the terminal device or the terminal device group. The second EAS may be an EAS that is providing a service for the terminal device or the terminal device group.

S609: The UDM sends the IP information of the second EAS to the SMF.

Correspondingly, the SMF receives the IP information of the second EAS from the UDM.

Optionally, the SMF may compare the IP information of the first EAS with the IP information of the second EAS. If the IP information of the two EASs is different from each other, the SMF may determine that the EASDF selects a new EAS.

S610: The SMF sends first notification information to the NEF.

Correspondingly, the NEF receives the first notification information from the SMF.

S610 may be a possible implementation of S303. The first notification information may carry the first identifier. Optionally, the first notification information may further include the UE ID/the UE group ID and the IP information of the first EAS.

In a possible case, the first notification information may be an event exposure notification (Nsmf_EventExposure _Notify).

Optionally, in S610, the first notification information may be sent at a UE granularity, or sent in batches based on a quantity of UE IDs.

S611 to S625 are implemented with reference to S511 to S525.

Manner 2: A monitoring network element is a UDM.

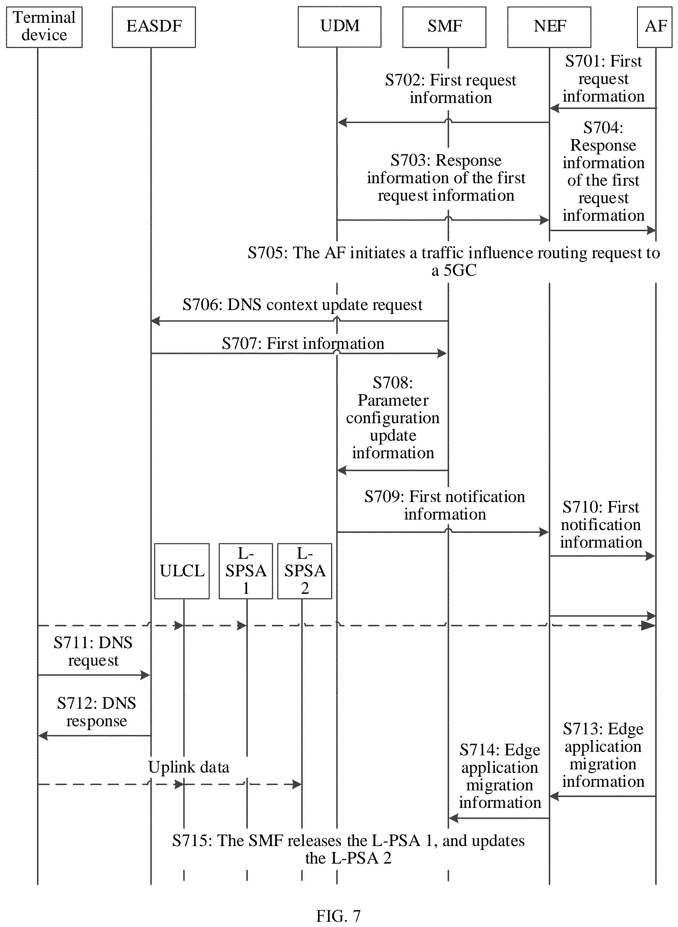

FIG. 7 is an example flowchart of a method for selecting an edge application server according to an embodiment of this application. The method may include the following operations.

S701: An AF sends first request information to an NEF.

Correspondingly, the NEF receives the first request information from the AF.

S701 may be a possible implementation of S301. The first request information may include a first identifier. Optionally, the first request information may carry a second identifier or an indication of any UE. In a possible case, the first request information in S701 may be a traffic influence subscription request (Nnef_TrafficInfluence_Subscribe Request).

S702: The NEF sends the first request information to a UDM.

S702 may be a possible implementation of S301. For information carried in the first request information, refer to related descriptions in S701.

In a possible case, the first request information in S402 may be an event exposure subscription request (Nsmf_EventExposure_Subscribe Request).

S703: The UDM sends response information of the first request information to the NEF.

Correspondingly, the NEF receives the response information of the first request information from the UDM.

S703 may be a possible implementation of S302. The response information of the first request information may include the first identifier and the second identifier.

S704: The NEF sends the response information of the first request information to the AF.

Correspondingly, the AF receives the response information of the first request information from the NEF.

S704 may be a possible implementation of S302. The response information of the first request information may include the first identifier and the second identifier.

S705 to S707 are implemented with reference to S505 to S507 or S605 to S607.

S708: The SMF sends parameter configuration update information to the UDM.

Correspondingly, the UDM receives the parameter configuration update information (Nudm_ParameterProvision_Update) from the SMF. The parameter configuration update information may indicate the UDM to update IP information of an EAS. The parameter configuration update information may include a UE ID/a UE group ID and IP information of a first EAS.

S709: The UDM sends first notification information to the NEF.

Correspondingly, the NEF receives the first notification information from the UDM.

S709 may be a possible implementation of S303. In a possible case, the first notification information may be an event exposure notification (Nudm_EventExposure_Notify). In S708, the UDM may determine IP information of a second EAS corresponding to the UE ID/the UE group ID, where the second EAS may be an EAS that is providing a service for a UE indicated by the UE ID or a terminal device group indicated by the UE group ID. If the IP information of the first EAS is different from the IP information of the second EAS, the UDM may determine that the EAS changes.

The first notification information may carry the first identifier. Optionally, the first notification information may further carry the UE ID and/or the UE group ID. If the first notification information carries the UE ID, the first notification information may be sent at a UE granularity, or sent in batches based on a quantity of UE IDs.

S710: The NEF sends the first notification information to the AF.

Correspondingly, the AF receives the first notification information from the NEF.

S710 may be a possible implementation of S303. In a possible case, the first notification information may be a traffic influence early notification (Nnef_TrafficInfluence_Notify).

S711 to S715 may be implemented with reference to S521 to S525.

FIG. 3 to FIG. 7 show a technical solution in which the core network device exchanges information with the AF, so that the terminal device accesses the new EAS. An embodiment of this application further provides another method for selecting an edge application server. In the method, when a core network device determines that an EAS of a terminal device changes, the core network device may send IP information of the EAS and first indication information to the terminal device. The first indication information may indicate the terminal device to establish an application layer connection to the EAS. Based on this solution, the terminal device may establish the application layer connection to the EAS based on the first indication information and the IP information of the EAS, so that the terminal device can access the new EAS to perform a service.

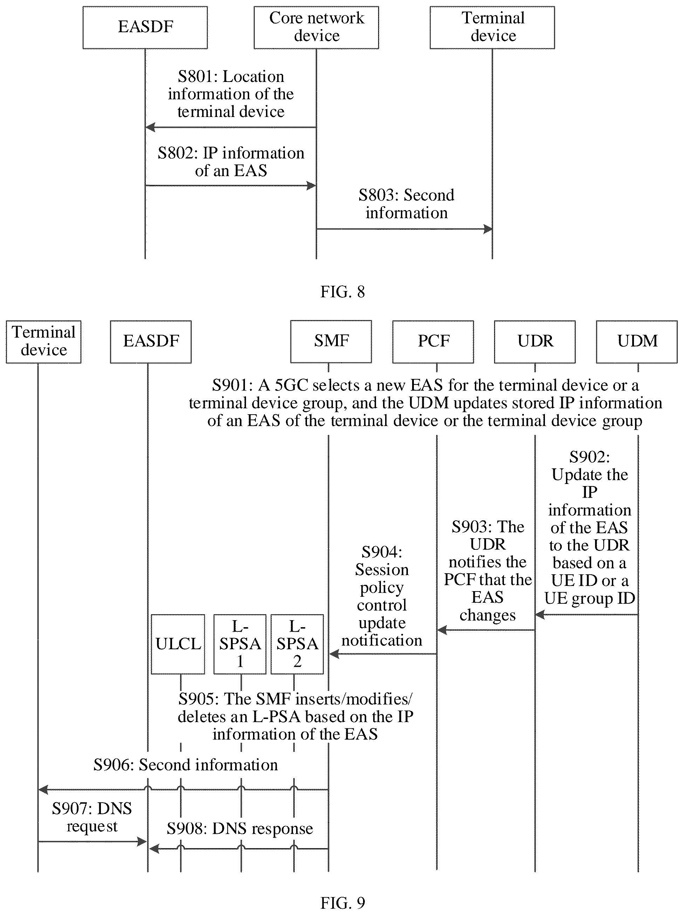

FIG. 8 is an example flowchart of a method for selecting an edge application server according to an embodiment of this application. The method may include the following operations.

S801: A core network device sends location information of a terminal device to an EASDF.

Correspondingly, the EASDF receives the location information of the terminal device from the core network device.

The location information of the terminal device may be determined by the core network device, for example, may be determined by an SMF included in the core network device. The SMF included in the core network device may send the location information of the terminal device to the EASDF.

In a possible case, when the location information of the terminal device changes, the core network device may send the location information of the terminal device to the EASDF. For example, the core network device may locate the terminal device, and send the location information of the terminal device to the EASDF when the location information of the located terminal device changes. It should be noted that a method for obtaining the location information of the terminal device by the core network device is not specifically limited in this application.

In another possible case, the terminal device may belong to a terminal device group. When a member in the terminal device group changes, the core network device may send location information of one or more terminal devices included in the terminal device group to the EASDF. For example, when a terminal device that joins in or leaves the terminal device group exists, the core network device sends the location information of the one or more terminal devices included in the terminal device group to the EASDF.

Optionally, the core network device may send a second identifier to the EASDF. The second identifier may indicate the one or more terminal devices. For example, a first identifier may be a terminal device identifier of the terminal device, for example, a UE ID. For another example, the second identifier may be an identifier of the terminal device group to which the terminal device belongs, for example, a UE group ID or an association ID. Optionally, the core network device may send, to the EASDF, an FQDN corresponding to the terminal device.

It may be understood that the core network device, for example, the SMF or a UDM/a UDR, may store the terminal device group identifier, an identifier of each terminal device in the terminal device group indicated by the terminal device group identifier, and an FQDN corresponding to each terminal device in the terminal device group.

In a possible implementation, the core network device may send second indication information to the EASDF, and the second indication information may indicate that an EAS of the one or more terminal devices changes. For example, the second indication information may be an EAS rediscovery (rediscovery) indicator (indicator).

Optionally, the core network device may send a DNS context update request (Neasdf DNSContext Update Request) to the EASDF. The DNS context update request may carry the location information of the one or more terminal devices. Optionally, the DNS context update request may further carry the FQDN and the second identifier.

S802: The EASDF sends IP information of the EAS to the core network device.

Correspondingly, the core network device receives the IP information of the EAS from the EASDF.

For example, the EASDF may determine the EAS for the terminal device based on the location information of the terminal device. In a possible case, the terminal device belongs to a terminal device group, and the EASDF may determine a common EAS for the terminal device group.

It should be noted that a method for determining the EAS by the EASDF is not specifically limited in this embodiment of this application.

In a possible implementation, the EASDF may send a DNS context update response (Neasdf DNSContext Update Response) to the core network device. The DNS context update response may carry the FQDN and IP information of a first EAS. Optionally, the DNS context update response may further carry the second identifier, for example, the UE ID and/or the UE group ID.

S803: The core network device sends second information to the terminal device.

Correspondingly, the terminal device receives the second information from the core network device.

The second information may include the IP information of the EAS and first indication information. The first indication information may indicate the terminal device to establish an application layer connection to the EAS. Optionally, the second information may be a PDU session update request. The PDU session update request may further carry the FQDN, and the terminal device may clear a stored DNS cache based on the FQDN.

Based on the foregoing solution, the terminal device may determine, based on the second information of the core network device, that the application layer connection needs to be established to the EAS. In this case, the terminal device may initiate a DNS request, to establish the application layer connection to the EAS, and does not need to initiate the DNS request after the terminal device disconnects from an application layer. Therefore, the terminal device can access the EAS to provide a service, to reduce latency of accessing the EAS by each terminal device in the terminal device group.

The following explains and describes, by using FIG. 9, the method for selecting the edge application server provided in the embodiment shown in FIG. 8.

FIG. 9 is an example flowchart of a method for selecting an edge application server according to an embodiment of this application. The method may include the following operations.

S901: A 5GC selects a new EAS for a terminal device or a terminal device group, and a UDM updates stored IP information of an EAS of the terminal device or the terminal device group.

S901 may be a possible implementation of S701 and S702. Optionally, for a method for selecting the new EAS by the 5GC for the terminal device or the terminal device group, refer to S301 and S302 in the embodiment shown in FIG. 3.

S902: The UDM updates the IP information of the EAS to a UDR based on a UE ID or a UE group ID.

S903: The UDR notifies a PCF that the EAS changes.

The UDR may send an FQDN and the IP information of the EAS to the PCF. Optionally, the UDR may further send the UE ID or the UE group ID to the PCF.

S904: The PCF sends a session policy control update notification to an SMF.

Correspondingly, the SMF receives the session policy control update notification (Npcf_SMPolicyControl_UpdateNotify) from the PCF. The session policy update notification may include the FQDN and the IP information of the EAS. Optionally, the session policy update notification may further include the UE ID or the UE group ID.

S905: The SMF inserts/modifies/deletes an L-PSA based on the IP information of the EAS.

S906: The SMF sends second information to the terminal device.

Correspondingly, the terminal device receives the second information from the SMF.

S906 may be a possible implementation of S703. The second information may include the IP information of the EAS and first indication information. The first indication information may indicate the terminal device to establish an application layer connection to the EAS. Optionally, the second information may be a PDU session update request. The PDU session update request may further carry the FQDN, and the terminal device may clear a stored DNS cache based on the FQDN.

In a possible case, the second information may be the PDU session update request.

S907 and S908 may be implemented with reference to S521 and S522.

The following describes a communication apparatus for implementing the foregoing method in embodiments of this application with reference to the accompanying drawings. Therefore, all the foregoing content may be used in the following embodiments. Repeated content is not described again.

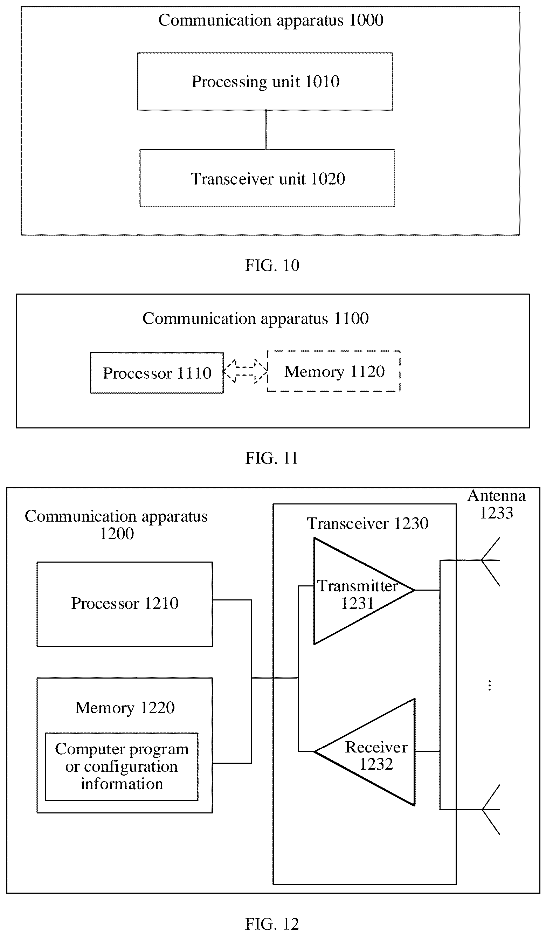

FIG. 10 is a block diagram of a communication apparatus 1000 according to an embodiment of this application. The communication apparatus 1000 may correspondingly implement functions or steps implemented by the core network device, the application function network element, or the edge application server discovery function network element in the foregoing method embodiments. The communication apparatus may include a processing unit 1010 and a transceiver unit 1020. Optionally, a storage unit may be further included. The storage unit may be configured to store instructions (code or a program) and/or data. The processing unit 1010 and the transceiver unit 1020 may be coupled to the storage unit. For example, the processing unit 1010 may read the instructions (the code or the program) and/or the data in the storage unit, to implement a corresponding method. The foregoing units may be independently disposed, or may be partially or completely integrated.

In some possible implementations, the communication apparatus 1000 can accordingly implement the behavior and the functions of the core network device in the foregoing method embodiments. For example, the communication apparatus 1000 may be a transmitting end, or may be a component (for example, a chip or a circuit) used in the core network device. The transceiver unit 1020 may be configured to perform all receiving or sending operations performed by the core network device in the embodiment shown in FIG. 3, for example, S301 in the embodiment shown in FIG. 3, and/or configured to support another process of the technology described in this specification. The processing unit 1010 is configured to perform all operations other than the receiving or sending operations performed by the core network device in the embodiment shown in FIG. 3.

For example, the transceiver unit 1020 is configured to receive first request information from an application function network element, where the first request information includes a first identifier, and the first identifier indicates an event that an edge application server EAS of one or more terminal devices changes. The first request information is used to subscribe to the event that the EAS of the one or more terminal devices changes. The processing unit 1010 is configured to monitor the event that the EAS of the one or more terminal devices changes. The transceiver unit 1020 is further configured to send first notification information to the application function network element, where the first notification information includes the first identifier. The first notification information indicates to migrate an application of the one or more terminal devices to a first EAS, and the first EAS is an EAS selected for the one or more terminal devices.

In some possible implementations, the communication apparatus 1000 can accordingly implement the behavior and the functions of the core network device in the foregoing method embodiments. For example, the communication apparatus 1000 may be a transmitting end, or may be a component (for example, a chip or a circuit) used in the core network device. The transceiver unit 1020 may be configured to perform all receiving or sending operations performed by the core network device in the embodiment shown in FIG. 8, for example, S801 in the embodiment shown in FIG. 8, and/or configured to support another process of the technology described in this specification. The processing unit 1010 is configured to perform all operations other than the receiving or sending operations performed by the core network device in the embodiment shown in FIG. 8.

For example, the transceiver unit 1020 is configured to send location information of a terminal device to the edge application server discovery function network element. The transceiver unit is further configured to receive internet protocol IP information of an edge application server EAS from the edge application server discovery function network element. The EAS is an EAS selected for the terminal device. The processing unit 1010 is configured to generate second information. The transceiver unit 1020 is further configured to send the second information to the terminal device, where the second information includes the IP information of the EAS and first indication information, and the first indication information indicates the terminal device to establish an application layer connection to the EAS.

In some possible implementations, the communication apparatus 1000 can correspondingly implement the behavior and functions of the application function network element in the foregoing method embodiments. For example, the communication apparatus 1000 may be an application function network element, or may be a component (for example, a chip or a circuit) used in the application function network element. The transceiver unit 1020 may be configured to perform all receiving or sending operations performed by the application function network element in the embodiment shown in FIG. 3, for example, S301 in the embodiment shown in FIG. 3, and/or configured to support another process of the technology described in this specification. The processing unit 1010 is configured to perform all operations other than the receiving or sending operations performed by the application function network element in the embodiment shown in FIG. 3, and/or configured to support another process of the technology described in this specification.

For example, the processing unit 1010 is configured to generate first request information. The transceiver unit 1020 is configured to send the first request information to a core network device, where the first request information includes a first identifier, and the first request information is used to subscribe to an event that an edge application server EAS of one or more terminal devices changes. The transceiver unit 1020 is further configured to receive first notification information from the core network device, where the first notification information includes the first identifier. The first notification information indicates to migrate an application of the one or more terminal devices to a first EAS, and the first EAS is an EAS selected for the one or more terminal devices.

In some possible implementations, the communication apparatus 1000 can correspondingly implement behavior and functions of the edge application server discovery function network element in the foregoing method embodiments. For example, the communication apparatus 1000 may be an application function network element, or may be a component (for example, a chip or a circuit) used in the application function network element. The transceiver unit 1020 may be configured to perform all receiving or sending operations performed by the edge application server discovery function network element in the embodiment shown in FIG. 8, for example, S801 in the embodiment shown in FIG. 8, and/or configured to support another process of the technology described in this specification. The processing unit 1010 is configured to perform all operations other than the receiving or sending operations performed by the edge application server discovery function network element in the embodiment shown in FIG. 8, and/or configured to support another process of the technology described in this specification.

For operations performed by the processing unit 1010 and the transceiver unit 1020, refer to related descriptions in the foregoing method embodiments.

It should be understood that the processing unit 1010 in this embodiment of this application may be implemented by a processor or a processor-related circuit component, and the transceiver unit 1020 may be implemented by a transceiver, a transceiver-related circuit component, or a communication interface.

Based on a same concept, as shown in FIG. 11, an embodiment of this application provides a communication apparatus 1100. The communication apparatus 1100 includes a processor 1110. Optionally, the communication apparatus 1100 may further include a memory 1120, configured to: store instructions executed by the processor 1110, or store input data required by the processor 1110 to run the instructions, or store data generated after the processor 1110 runs the instructions. The processor 1110 may implement the methods shown in the foregoing method embodiments based on the instructions stored in the memory 1120.

Based on a same concept, as shown in FIG. 12, an embodiment of this application provides a communication apparatus 1200. The communication apparatus 1200 may be a chip or a chip system. Optionally, in this embodiment of this application, the chip system may include a chip, or may include a chip and another discrete device.

The communication apparatus 1200 may include at least one processor 1210. The processor 1210 is coupled to a memory. Optionally, the memory may be located inside the apparatus, or may be located outside the apparatus. For example, the communication apparatus 1200 may further include at least one memory 1220. The memory 1220 stores a computer program, configuration information, a computer program or instructions, and/or data necessary for implementing any one of the foregoing embodiments. The processor 1210 may execute the computer program stored in the memory 1220, to complete the method in any one of the foregoing embodiments.

Coupling in this embodiment of this application may be an indirect coupling or a communication connection between apparatuses, units, or modules in an electrical form, a mechanical form, or another form, and is used for information exchange between the apparatuses, the units, or the modules. The processor 1210 may perform a cooperative operation with the memory 1220. In this embodiment of this application, a specific connection medium between the transceiver 1230, the processor 1210, and the memory 1220 is not limited.

The communication apparatus 1200 may further include the transceiver 1230, and the communication apparatus 1200 may exchange information with another device through the transceiver 1230. The transceiver 1230 may be a circuit, a bus, a transceiver, or any other apparatus that can be configured to exchange information, or is referred to as a signal transceiver unit. As shown in FIG. 12, the transceiver 1230 includes a transmitter 1231, a receiver 1232, and an antenna 1233. In addition, when the communication apparatus 1200 is a chip-type apparatus or a circuit, the transceiver in the communication apparatus 1200 may alternatively be an input/output circuit and/or a communication interface, and may input data (or referred to as "receive data") and output data (or referred to as "send data"). The processor is an integrated processor, a microprocessor, or an integrated circuit, and the processor may determine output data based on input data.

In a possible implementation, the communication apparatus 1200 may be used in a core network device. Specifically, the communication apparatus 1200 may be a core network device, or may be an apparatus that can support the core network device in implementing a function of the core network device in any one of the foregoing embodiments. The memory 1220 stores a necessary computer program, a computer program or instructions, and/or data for implementing the function of the core network device in any one of the foregoing embodiments. The processor 1210 may execute the computer program stored in the memory 1220, to complete the method performed by the core network device in any one of the foregoing embodiments.

In a possible implementation, the communication apparatus 1200 may be used in an application function network element. Specifically, the communication apparatus 1200 may be an application function network element, or may be an apparatus that can support the application function network element in implementing a function of the application function network element in any one of the foregoing embodiments. The memory 1220 stores a necessary computer program, a computer program or instructions, and/or data for implementing the function of the application function network element in any one of the foregoing embodiments. The processor 1210 may execute the computer program stored in the memory 1220, to complete the method performed by the application function network element in any one of the foregoing embodiments.

In a possible implementation, the communication apparatus 1200 may be used in an edge application server discovery function network element. Specifically, the communication apparatus 1200 may be an edge application server discovery function network element, or may be an apparatus that can support the edge application server discovery function network element in implementing a function of the edge application server discovery function network element in any one of the foregoing embodiments. The memory 1220 stores a necessary computer program, a computer program or instructions, and/or data for implementing the function of the edge application server discovery function network element in any one of the foregoing embodiments. The processor 1210 may execute the computer program stored in the memory 1220, to complete the method performed by the edge application server discovery function network element in any one of the foregoing embodiments.

The communication apparatus 1200 provided in this embodiment may be used in a transmitting end to complete the foregoing method performed by the transmitting end, or may be used in a receiving end to complete the method performed by the receiving end. Therefore, for technical effects that can be achieved by this embodiment, refer to the foregoing method embodiments. Details are not described herein again.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. The memory in this embodiment of this application may alternatively be a circuit or any other apparatus that can implement a storage function, and is configured to store a computer program, a computer program or instructions, and/or data.

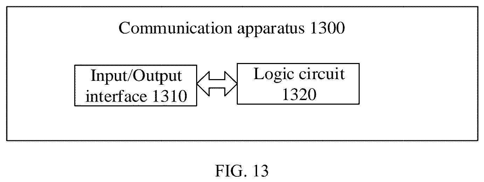

Based on the foregoing embodiments, refer to FIG. 13. An embodiment of this application further provides another communication apparatus 1300, including an input/output interface 1310 and a logic circuit 1320. The input/output interface 1310 is configured to receive a code instruction and transmit the code instruction to the logic circuit 1320. The logic circuit 1320 is configured to run the code instruction to perform the method performed by the core network device, the application function network element, or the edge application server discovery function network element in any one of the foregoing embodiments.

The communication apparatus 1300 provided in this embodiment may be used in a core network device, an application function network element, or an edge application server discovery function network element, to complete the method performed by the core network device, the application function network element, or the edge application server discovery function network element. Therefore, for technical effects that can be achieved by this embodiment, refer to the foregoing method embodiments. Details are not described herein again.

Based on the foregoing embodiments, an embodiment of this application further provides a communication system. The communication system includes at least one communication apparatus used in a core network device and at least one communication apparatus used in an application function network element. Alternatively, the communication system includes at least one communication apparatus used in a core network device and at least one communication apparatus used in an edge application server discovery function network element. For technical effect that can be achieved by this embodiment, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the core network device, the application function network element, or the edge application server discovery function network element in any one of the foregoing embodiments is implemented. The computer-readable storage medium may include any medium that can store program code, for example, a USB flash drive, a removable hard disk drive, a read-only memory, a random access memory, a magnetic disk, or an optical disc.

To implement functions of the communication apparatuses in FIG. 10 to FIG. 13, an embodiment of this application further provides a chip, including a processor, configured to support the communication apparatus in implementing functions related to the core network device, the application function network element, or the edge application server discovery function network element in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more procedures in the flowcharts and/or in one or more blocks in the block diagrams.

The computer program or the instructions may alternatively be stored in a computer-readable memory that can instruct the computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

Apparently, a person skilled in the art may make various modifications and variations to embodiments of this application without departing from the scope of embodiments of this application. In this case, this application is intended to cover these modifications and variations of embodiments of this application provided that they fall within the scope of protection defined by the following claims and their equivalent technologies of this application.

## Claims

1. A method for selecting an edge application server, comprising:
receiving, by a core network device, first request information from an application function network element, wherein the first request information comprises a first identifier, the first identifier indicates an event that an edge application server EAS of one or more terminal devices changes, and the first request information is used to subscribe to the event that the EAS of the one or more terminal devices changes; and
sending, by the core network device, first notification information to the application function network element, wherein the first notification information comprises the first identifier, and the first notification information indicates that the EAS of the one or more terminal devices changes.

2. The method according to claim 1, wherein that the first notification information indicates that the EAS of the one or more terminal devices changes comprises: the first notification information indicates to migrate an application of the one or more terminal devices to a first EAS, and the first EAS is an EAS selected for the one or more terminal devices; and the method further comprises:
receiving, by the core network device, second notification information from the application function network element, wherein the second notification information indicates that the first EAS supports application migration;
configuring, by the core network device, a user plane path for the first EAS; and
sending, by the core network device, third notification information to the application function network element, wherein the third notification information comprises the first identifier, and the third notification information indicates that the user plane path of the first EAS is already configured.

3. The method according to claim 2, further comprising:
sending, by the core network device, location information of the one or more terminal devices to an edge application server discovery function network element; and
receiving, by the core network device, first information from the edge application server discovery function network element, wherein the first information comprises a full qualified domain name and internet protocol IP information of the first edge application server EAS, the full qualified domain name is associated with the one or more terminal devices, and the first EAS is the EAS selected for the one or more terminal devices.

4. The method according to either of claims 2 and 3, wherein the first notification information further comprises the IP information of the first EAS.

5. The method according to any one of claims 2 to 4, wherein the first notification information further comprises a second identifier, and the second identifier indicates the one or more terminal devices.

6. The method according to claim 2, wherein the second notification information further comprises a second identifier and/or IP information of the first EAS, and the second identifier indicates the one or more terminal devices.

7. The method according to claim 3, wherein the first information further comprises a second identifier, and the second identifier indicates the one or more terminal devices.

8. The method according to any one of claims 5 to 7, wherein the second identifier comprises a group identifier of a terminal device group comprising the one or more terminal devices, or the second identifier comprises a terminal device identifier of the one or more terminal devices.

9. The method according to claim 3, wherein receiving, by the core network device, the first information from the edge application server discovery function network element comprises:
receiving, by a session management function network element comprised in the core network device, the first information from the edge application server discovery function network element; and
sending, by the session management function network element, second request information to a unified data management function network element comprised in the core network device, wherein the second request information comprises the full qualified domain name and a third identifier corresponding to the full qualified domain name, the third identifier indicates the one or more terminal devices, and the second request information is used to request IP information of a second EAS corresponding to the full qualified domain name; and
sending, by the unified data management function network element, the IP information of the second EAS to the session management function network element.

10. The method according to claim 9, further comprising:
sending, by the session management function network element, the IP information of the first EAS and the third identifier to the unified data management function network element; and
correspondingly storing, by the unified data management function network element, the IP information of the first EAS and the third identifier.

11. The method according to claim 1, wherein receiving, by the core network device, the first request information from the application function network element comprises:
receiving, by a network exposure function network element comprised in the core network device, the first request information from the application function network element; and
sending, by the network exposure function network element, the first request information to a session management function network element comprised in the core network device; and
sending, by the core network device, response information of the first request information to the application function network element comprises:
sending, by the session management function network element, the response information of the first request information to the network exposure function network element; and
sending, by the network exposure function network element, the response information of the first request information to the application function network element.

12. The method according to claim 1, wherein receiving, by the core network device, the first request information from the application function network element comprises:
receiving, by a network exposure function network element comprised in the core network device, the first request information from the application function network element; and
sending, by the network exposure function network element, the first request information to a unified data management function network element comprised in the core network device; and
sending, by the core network device, response information of the first request information to the application function network element comprises:
sending, by the unified data management function network element, the response information of the first request information to the network exposure function network element; and
sending, by the network exposure function network element, the response information of the first request information to the application function network element.

13. The method according to claim 1, wherein sending, by the core network device, the first notification information to the application function network element comprises:
sending, by a session management function network element comprised in the core network device, the first notification information to a network exposure function network element comprised in the core network device; and
sending, by the network exposure function network element, the first notification information to the application function network element.

14. The method according to claim 1, wherein sending, by the core network device, the first notification information to the application function network element comprises:
sending, by a unified data management function comprised in the core network device, the first notification information to a network exposure function network element comprised in the core network device; and
sending, by the network exposure function network element, the first notification information to the application function network element.

15. The method according to claim 2, wherein receiving, by the core network device, the second notification information from the application function network element comprises:
receiving, by a network exposure function network element comprised in the core network device, the second notification information from the application function network element; and
sending, by the network exposure function network element, the second notification information to a session management function network element comprised in the core network device; and
sending, by the core network device, the third notification information to the application function network element comprises:
sending, by the session management function network element, the third notification information to the network exposure function network element; and
sending, by the network exposure function network element, the third notification information to the application function network element.

16. A method for selecting an edge application server, comprising:
sending, by an application function network element, first request information to a core network device, wherein the first request information comprises a first identifier, the first request information is used to subscribe to an event that an edge application server EAS of one or more terminal devices changes, and the first identifier indicates the event that the edge application server EAS of the one or more terminal devices changes; and
receiving, by the application function network element, first notification information from the core network device, wherein the first notification information comprises the first identifier, and the first notification information indicates that the EAS of the one or more terminal devices changes.

17. The method according to claim 16, wherein that the first notification information indicates that the EAS of the one or more terminal devices changes comprises: the first notification information indicates to migrate an application of the one or more terminal devices to a first EAS, and the first EAS is an EAS selected for the one or more terminal devices; and the method further comprises:
sending, by the application function network element, second notification information to the core network device, wherein the second notification information indicates that the first EAS supports application migration; and
receiving, by the application function network element, third notification information from the core network device, wherein the third notification information comprises the first identifier, and the third notification information indicates that a user plane path of the first EAS is already configured.

18. The method according to claim 17, wherein the first notification information further comprises IP information of the first EAS.

19. The method according to either of claims 17 and 18, wherein the first request information further comprises a second identifier, and the second identifier indicates the one or more terminal devices.

20. The method according to claim 17, wherein the second notification information further comprises a second identifier and/or IP information of the first EAS, and the second identifier indicates the one or more terminal devices.

21. The method according to claim 19 or 20, wherein the second identifier comprises a group identifier of a terminal device group comprising the one or more terminal devices, or the second identifier comprises a terminal device identifier of the one or more terminal devices.

22. The method according to claim 16, wherein sending, by the application function network element, the first request information to the core network device comprises:
sending, by the application function network element, the first request information to a network exposure function network element comprised in the core network device.

23. The method according to claim 16, wherein receiving, by the application function network element, the first notification information from the core network device comprises:
receiving, by the application function network element, the first notification information from a network exposure function network element comprised in the core network device.

24. A method for selecting an edge application server, comprising:
receiving, by an edge application server discovery function network element, location information of a terminal device and second indication information from a core network device, wherein the second indication information indicates to update an EAS of the terminal device; and
sending, by the edge application server discovery function network element, first information to the core network device, wherein the first information comprises a full qualified domain name and internet protocol IP information of a first edge application server EAS, the full qualified domain name is associated with the terminal device, and the first EAS is an EAS selected for the terminal device.

25. The method according to claim 24, wherein receiving, by the edge application server discovery function network element, location information of one or more terminal devices from the core network device comprises:
receiving, by the edge application server discovery function network element, the location information of the terminal device and the second indication information from a session management function network element comprised in the core network device; and
sending, by the edge application server discovery function network element, the first information to the core network device comprises:
sending, by the edge application server discovery function network element, the first information to the session management function network element comprised in the core network device.

26. A method for selecting an edge application server, comprising:
sending, by a core network device, location information of a terminal device to an edge application server discovery function network element;
receiving, by the core network device, internet protocol IP information of an edge application server EAS from the edge application server discovery function network element, wherein the EAS is an EAS selected for the terminal device; and
sending, by the core network device, second information to the terminal device, wherein the second information comprises the IP information of the EAS and first indication information, and the first indication information indicates the terminal device to establish an application layer connection to the EAS.

27. The method according to claim 26, further comprising:
sending, by the core network device, a second identifier to the edge application server discovery function network element, wherein the second identifier indicates the terminal device.

28. The method according to claim 27, wherein the second identifier comprises a group identifier of a terminal device group to which the terminal device belongs, or the second identifier comprises a terminal device identifier of the terminal device.

29. The method according to claim 26, wherein sending, by the core network device, the second information to the terminal device comprises:
sending, by the core network device, a session update request to the terminal device, wherein the session update request comprises the second information.

30. The method according to claim 26, wherein sending, by the core network device, the location information of the terminal device to the edge application server discovery function network element comprises:
sending, by a session management function network element comprised in the core network device, the location information to the edge application server discovery function network element; and
receiving, by the core network device, the internet protocol IP information of the edge application server EAS from the edge application server discovery function network element comprises:
receiving, by the session management function network element, the IP information of the EAS from the edge application server discovery function network element.

31. A communication apparatus, comprising a unit configured to perform the method according to any one of claims 1 to 15, comprising a unit configured to perform the method according to any one of claims 16 to 23, comprising a unit configured to perform the method according to claim 24 or 25, or comprising a unit configured to perform the method according to any one of claims 26 to 30.

32. A communication apparatus, comprising a processor and a memory, wherein
the memory is configured to store a computer program or instructions; and
the processor is configured to execute the computer program or the instructions in the memory, to enable the apparatus to perform the method according to any one of claims 1 to 15, enable the apparatus to perform the method according to any one of claims 16 to 23, enable the apparatus to perform the method according to claim 24 or 25, or enable the apparatus to perform the method according to any one of claims 26 to 30.

33. A computer-readable storage medium, wherein the computer-readable storage medium stores computer-executable instructions, and when the computer-executable instructions are invoked by an electronic apparatus, the electronic apparatus is enabled to perform the method according to any one of claims 1 to 15, the electronic apparatus is enabled to perform the method according to any one of claims 16 to 23, the electronic apparatus is enabled to perform the method according to claim 24 or 25, or the electronic apparatus is enabled to perform the method according to any one of claims 26 to 30.

34. A chip system, comprising a communication interface and a processor, wherein
the communication interface is configured to input and/or output signaling or data; and
the processor is configured to execute a computer-executable program, to enable a device on which the chip system is installed to perform the method according to any one of claims 1 to 30.

35. A communication method, comprising:
sending, by an application function network element, first request information to a core network device, wherein the first request information comprises a first identifier, the first identifier indicates an event that an edge application server EAS of one or more terminal devices changes, and the first request information is used to subscribe to the event that the EAS of the one or more terminal devices changes;
receiving, by the core network device, the first request information;
sending, by the core network device, first notification information to the application function network element, wherein the first notification information comprises the first identifier, and the first notification information indicates that the EAS of the one or more terminal devices changes; and
receiving, by the application function network element, the first notification information.

36. A communication method, comprising:
receiving, by an edge application server discovery function network element, location information of a terminal device and second indication information from a core network device, wherein the second indication information indicates to update an EAS of the terminal device;
sending, by the edge application server discovery function network element, first information to the core network device, wherein the first information comprises a full qualified domain name and internet protocol IP information of a first edge application server EAS, the full qualified domain name is associated with the terminal device, and the first EAS is an EAS selected for the terminal device; and
receiving, by the core network device, the first information.

37. A communication method, comprising:
sending, by a core network device, location information of a terminal device to an edge application server discovery function network element;
receiving, by the edge application server discovery function network element, the location information of the terminal device, and sending internet protocol IP information of an edge application server EAS to the core network device, wherein the EAS is an EAS selected for the terminal device;
receiving, by the core network device, the IP information of the EAS; and
sending, by the core network device, second information to the terminal device, wherein the second information comprises the IP information of the EAS and first indication information, and the first indication information indicates the terminal device to establish an application layer connection to the EAS.

38. A system, comprising one or more of the following devices:
a device configured to perform the method according to any one of claims 1 to 15,
a device configured to perform the method according to any one of claims 16 to 23,
a device configured to perform the method according to claim 24 or 25, or
a device configured to perform the method according to any one of claims 26 to 30.
